# EUROPEAN PATENT APPLICATION

(11) **EP 4 686 055 A1**
(43) Date of publication of application: **28.01.2026**
(21) Application number: 24850909.3
(22) Date of filing: 01.08.2024
(51) Int. Cl.: H02K 33/18

(54) **MOTOR, CAMERA MODULE AND ELECTRONIC DEVICE**

(30) Priority: 04.08.2023 CN 202310983161; 27.09.2023 CN 202311283758
(71) Applicant: HUAWEI TECHNOLOGIES CO., LTD., Shenzhen, Guangdong 518129 (CN)
(72) Inventor: LI, Zhangcheng, Shenzhen, Guangdong 518129 (CN); HUANG, Pei, Shenzhen, Guangdong 518129 (CN); SUN, Zhanli, Shenzhen, Guangdong 518129 (CN); CAI, Bin, Shenzhen, Guangdong 518129 (CN); LI, Sikun, Shenzhen, Guangdong 518129 (CN)
(74) Representative: Goddar, Heinz J.
(86) International application number: PCT/CN2024/109323
(87) International publication number: WO 2025/031264

(57) **Abstract**

This application provides a motor, a camera module, and an electronic device. The motor includes a base, an image stabilization bracket, a focusing bracket, a first magnetic piece, a first focusing coil, and a first image stabilization coil. The image stabilization bracket is movably connected to the base. The focusing bracket is movably connected to the image stabilization bracket. The first magnetic piece is fastened to the image stabilization bracket. The first focusing coil is fastened to the focusing bracket and is disposed facing the first magnetic piece, to drive the focusing bracket to move relative to the base in a first direction. The first image stabilization coil is fastened to the base and is disposed facing the first magnetic piece, to drive the image stabilization bracket to actuate the focusing bracket to move relative to the base in a second direction, where the second direction intersects the first direction. The first image stabilization coil, the first magnetic piece, and the first focusing coil are sequentially arranged in the second direction. A group of magnetic pieces of the motor in this application can control both the focusing bracket and the image stabilization bracket to move, and an overall structure is simple and compact. This helps implement miniaturization and thinning of the motor.

## Description

This application claims priorities to Chinese Patent Application No. 202310983161.6, filed with the China National Intellectual Property Administration on August 4, 2023 and entitled "MOTOR, CAMERA LENS MODULE, AND ELECTRONIC DEVICE", and to Chinese Patent Application No. 202311283758.6, filed with the China National Intellectual Property Administration on September 27, 2023 and entitled "MOTOR, CAMERA MODULE, AND ELECTRONIC DEVICE", both of which are incorporated herein by reference in their entireties.

### TECHNICAL FIELD

This application relates to the field of camera technologies, and in particular, to a motor, a camera module, and an electronic device.

### BACKGROUND

Currently, camera modules usually use a VCM (Voice Coil Motor, voice coil motor) motors to perform real-time detection and feedback on mobile phone shake that is within a specific frequency and amplitude range during image shooting, and perform reverse compensation, to implement a focusing function and an image stabilization function, further improve an image shooting function and quality, and ensure image quality. However, a conventional motor usually needs to be provided with two different driving mechanisms, to respectively drive rotors to move in an optical axis direction to implement auto focus, and drive the rotors to move along a plane perpendicular to an optical axis to implement optical image stabilization. Consequently, a volume of the motor is usually large, and it is not conducive to implementing miniaturization of the motor.

### SUMMARY

Implementations of this application provide a motor, a camera module including the motor, and an electronic device including the camera module, to obtain a motor that has a simpler and more compact overall structure and can implement miniaturization and thinning.

According to a first aspect, this application provides a motor. The motor includes a base, an image stabilization bracket, a focusing bracket, a first magnetic piece, a first focusing coil, and a first image stabilization coil. The image stabilization bracket is movably connected to the base. The focusing bracket is located on an inner side of the image stabilization bracket and is movably connected to the image stabilization bracket. The focusing bracket is configured to install a lens. The first magnetic piece is fastened to the image stabilization bracket. The first focusing coil is fastened to the focusing bracket, and the first focusing coil is disposed facing the first magnetic piece, to drive the focusing bracket to move relative to the base in a first direction. The first image stabilization coil is fastened to the base, and the first image stabilization coil is disposed facing the first magnetic piece, to drive the image stabilization bracket to actuate the focusing bracket to move relative to the base in a second direction. The second direction intersects the first direction. The first image stabilization coil, the first magnetic piece, and the first focusing coil are sequentially arranged in the second direction.

The motor in this implementation of this application includes the focusing bracket, the image stabilization bracket, the first focusing coil, the first image stabilization coil, and the first magnetic piece. The first magnetic piece may cooperate with the first focusing coil, to drive the focusing bracket to move relative to the base in the first direction. The first magnetic piece may further cooperate with the first image stabilization coil, to drive the image stabilization bracket to actuate the focusing bracket to move relative to the base in the second direction. When the lens is mounted on the focusing bracket, it may be considered that the first direction is parallel to an optical axis direction of the lens. In another embodiment, the first direction may alternatively intersect the optical axis direction of the lens. This is not limited in this application. The focusing bracket is controlled to move relative to the base in the first direction, so that the lens can be actuated to move relative to the base in the first direction (namely, the optical axis direction), to implement a focusing function of the motor. The movement of the focusing bracket relative to the base in the second direction is controlled, so that the lens can be actuated to move relative to the base in the second direction, that is, the lens can move relative to the base in a plane perpendicular to an optical axis, to implement an image stabilization function of the motor.

In other words, the motor in this implementation is an integrated motor that has both an image stabilization function and a focusing function, and the focusing bracket is located on an inner side of the image stabilization bracket. Compared with a split motor in which the image stabilization bracket and the focusing bracket are separately disposed, the motor in this implementation has a smaller volume and a more compact structure. This helps reduce a size of the motor. In addition, the first magnetic piece in the motor in this implementation may cooperate with the first focusing coil to control movement of the focusing bracket, and may also cooperate with the first image stabilization coil to control movement of the image stabilization bracket to actuate the focusing bracket to move. Compared with the motor in which a plurality of groups of different magnetic pieces need to be disposed to respectively cooperate with the focusing coils to control the focusing bracket to move in the first direction, and cooperate with the image stabilization coils to drive the image stabilization bracket to move in the second direction, an overall structure of the motor in this implementation is simpler and more compact, helping implement miniaturization of the motor.

In this implementation, the first image stabilization coil, the first magnetic piece, and the first focusing coil in the motor are sequentially arranged in the second direction, so that a space of the motor in the first direction (namely, a height direction of the motor) can be saved, and a space in the height direction of the motor can be fully used. This is conducive to improving utilization of an internal space of the motor, so that a structure of the motor is more compact, and this is also conducive to implementing thinning and miniaturization of the motor.

In addition, the first magnetic piece is located between the first image stabilization coil and the first focusing coil, so that reliability of the motor can be improved while focusing performance and image stabilization performance of the motor are ensured. Specifically, when the first magnetic piece is located between the first image stabilization coil and the first focusing coil, the first magnetic piece may isolate the first image stabilization coil from the first focusing coil. This avoids mutual interference caused by mutual superposition of magnetic fields generated after the first image stabilization coil and the second focusing coil are energized, and avoids a crosstalk phenomenon that affects control precision of a focusing process and an image stabilization process, thereby affecting reliability of the motor.

In a possible implementation, winding planes of the first image stabilization coil and the first focusing coil are both parallel to the first direction. In other words, the first image stabilization coil and the first focusing coil are both vertically disposed, so that a size of the motor in the second direction can be reduced. This is conducive to implementing miniaturization of the motor.

In a possible implementation, a driving force for the focusing bracket to move in the first direction is an ampere force formed on the first focusing coil when the energized first focusing coil is in a magnetic field of the first magnetic piece. A driving force for the image stabilization bracket to move in the second direction is an attraction force or a repulsion force between the first magnetic piece and an electromagnet after the first image stabilization coil is energized to form the electromagnet. In this case, a principle of driving the focusing bracket to move is different from a principle of driving the image stabilization bracket to move, to ensure that the first magnetic piece can be reused while the first image stabilization coil, the first magnetic piece, and the first focusing coil are arranged in the second direction, and that the first magnetic piece can cooperate with the first focusing coil to implement a focusing function, and can also cooperate with the first image stabilization coil to implement an image stabilization function.

In a possible implementation, the first magnetic piece includes a first magnet and a second magnet, the first magnet and the second magnet are arranged in the first direction, and a polarity direction of the first magnet is opposite to a polarity direction of the second magnet, and is parallel to the second direction. The first image stabilization coil includes a first image stabilization sub-coil and a second image stabilization sub-coil. The first image stabilization sub-coil faces the first magnet, and the second image stabilization sub-coil faces the second magnet. In this implementation, the first image stabilization sub-coil faces the first magnet, it may be considered that the first image stabilization magnetic piece and the first image magnetic stabilization piece may maintain a direct opposite relationship or an almost direct opposite relationship, and a projection of the first image stabilization sub-coil in the second direction is located only or almost only in the first magnet. In this case, a combined force of ampere forces formed on the energized first image stabilization sub-coil is zero, and a magnetic flux passing through the first image stabilization sub-coil is the largest. The first image stabilization sub-coil forms a first electromagnet. Similarly, the energized second image stabilization sub-coil also forms a second electromagnet.

The first image stabilization sub-coil and the second image stabilization sub-coil are respectively disposed corresponding to the first magnet and the second magnet. In this implementation, a driving force for pushing the image stabilization bracket to move in the motor may include a magnetic force between the first electromagnet and the first magnet and a magnetic force between the second electromagnet and the second magnet. The magnetic force may be an attraction force or a repulsion force. This helps increase a value of a driving force, improve driving efficiency, and increase an optical image stabilization stroke. In another embodiment, the first magnetic piece may alternatively include a first magnetic sub-piece and a second magnetic sub-piece that are arranged in the first direction. Polarity directions of the first magnetic sub-piece and the second magnetic sub-piece are arranged consistently, and both the first magnetic sub-piece and the second magnetic sub-piece have two opposite polarity directions. Alternatively, the first magnetic piece is a Halbach magnet array.

In a possible implementation, winding planes of the first image stabilization sub-coil and the second image stabilization sub-coil are both parallel to the first direction. The winding planes of the first image stabilization sub-coil and the second image stabilization sub-coil are set to be parallel to the first direction. In other words, the first image stabilization sub-coil and the second image stabilization sub-coil are vertically arranged. This helps reduce a size of the motor in the second direction and helps implement miniaturization of the motor.

In a possible implementation, the first focusing coil includes a first edge and a second edge that are disposed opposite to each other in the first direction, the first edge of the first focusing coil is disposed opposite to the first magnet, and the second edge of the first focusing coil is disposed opposite to the second magnet. When a current is supplied to the first focusing coil, a current flow direction on the first edge of the first focusing coil is opposite to a current flow direction on the second edge of the first focusing coil, and polarity directions of the first magnet and the second magnet are opposite. Therefore, a direction of an ampere force exerted on the first edge of the first focusing coil in a magnetic field generated by the first magnet is the same as a direction of an ampere force exerted on the second edge of the first focusing coil in a magnetic field generated by the second magnet, and a combined force formed through superposition can provide a larger driving force for a focusing process of the motor. This helps improve driving efficiency and increase an optical focusing stroke.

In a possible implementation, the base includes a bottom plate and a first side plate, the first side plate is connected to a surface of the bottom plate, and the image stabilization bracket is located on an inner side of the first side plate, and is movably connected to the bottom plate. The image stabilization bracket includes a first edge portion, the first edge portion is disposed opposite to the first side plate, the first magnetic piece is fastened to the first edge portion, and the first image stabilization coil is fastened to the first side plate. In this case, the first edge portion can provide strength support for the first magnetic piece, and the first side plate can also provide strength support for the first image stabilization coil, so that relative positions of the first magnetic piece and the first image stabilization coil are more stable. In another embodiment, the first side plate may not be disposed in the base, and the first image stabilization coil may be fastened to the bottom plate through a structure like a circuit board.

In a possible implementation, the first edge portion is provided with a first via, the first via communicates an inner side with an outer side of the image stabilization bracket, and the first magnetic piece is at least partially located in the first via. In this case, the first magnetic piece and the image stabilization bracket are arranged in a compact structure. This helps improve space utilization.

In a possible implementation, the base includes a second side plate, the second side plate is connected to the surface of the bottom plate, the second side plate is located on a side that is of the image stabilization bracket and that is away from the first side plate, the image stabilization bracket includes a second edge portion, and the second edge portion is disposed opposite to the second side plate. The motor includes a second magnetic piece and a second image stabilization coil. The second magnetic piece is fastened to the second edge portion, the second image stabilization coil is fastened to the second side plate, and the second image stabilization coil is disposed facing the second magnetic piece, to drive the image stabilization bracket to actuate the focusing bracket to move relative to the base in the second direction. The second image stabilization coil is disposed to cooperate with the second magnetic piece, so that a driving force in the motor in the second direction can be increased, and the motor can drive the lens to implement an image stabilization process at a larger angle.

In a possible implementation, the motor further includes a second focusing coil. The second focusing coil is fastened to a side that is of the focusing bracket and that faces away from the first focusing coil. The second focusing coil is disposed facing the second magnetic piece, to drive the focusing bracket to move relative to the base in the first direction. The second focusing coil is disposed to cooperate with the second magnetic piece, so that a driving force in the motor in the first direction can be increased. This helps the focusing bracket carry a lens with higher quality and actuate the lens to implement a focusing process.

In a possible implementation, the motor further includes a third magnetic piece and a third image stabilization coil, the third magnetic piece is mounted on the image stabilization bracket, the third image stabilization coil is disposed facing the third magnetic piece, the third magnetic piece is configured to drive the image stabilization bracket to move relative to the base in a third direction, and the third direction intersects both the first direction and the second direction. The third image stabilization coil and the third magnetic piece are arranged in the first direction. In this case, cooperation between the third magnetic piece and the third image stabilization coil can provide a degree of freedom for the lens to move in the third direction. This helps improve an application range of the motor and optimize image stabilization performance.

In addition, the third image stabilization coil and the third magnetic piece are disposed in the first direction Z. In a process in which the image stabilization bracket moves relative to the base, a movement direction of the image stabilization bracket is perpendicular to a magnetic gap between the third magnetic piece and the third image stabilization coil. The magnetic gap is not affected by a movement action of the image stabilization bracket. Therefore, a problem of a rapid decrease of a driving force caused by an increase of the magnetic gap can be avoided, and stability of the driving force can be ensured while a large image stabilization driving force is obtained. This is beneficial to a large-stroke image stabilization design.

In a possible implementation, a winding direction of the third image stabilization coil is parallel to the third direction. In this case, the third image stabilization coil may be disposed horizontally. This helps reduce a size of the motor in the first direction, and implement miniaturization of the motor.

In a possible implementation, the base includes the bottom plate, a first fastening block, a second fastening block, and a fastening plate. The first fastening block and the second fastening block are fastened to the bottom plate and are spaced from each other, one end of the fastening plate is fastened to the first fastening block, the other end is fastened to the second fastening block, and the bottom plate, the first fastening block, the second fastening block, and the fastening plate enclose an accommodation space. The third image stabilization coil is fastened to a side that is of the fastening plate and that faces the accommodation space, and at least a part of the third magnetic piece extends into the accommodation space. In this case, the third image stabilization coil, the third magnetic piece, and the base are compactly arranged. This helps improve space utilization.

In a possible implementation, the motor further includes a ball group, the ball group is mounted on the base, and the image stabilization bracket is movably connected to the base through the ball group. Each ball group may include a plurality of balls. A quantity of balls may be five, sixteen, thirty-two, or the like. This is not limited in this application. In this implementation, a movable connection between the image stabilization bracket and the focusing bracket is implemented by using the ball group, so that friction resistance between the ball and the image stabilization bracket can be reduced while a sufficient support force is ensured, and requirements for a value of a driving force in a process of driving the image stabilization bracket to move can be reduced. This helps reduce a size of the first magnetic piece and/or the first image stabilization coil, and helps implement miniaturization of the motor. In addition, a diameter of each ball in the ball group is smaller than a diameter of a single ball. This also helps shorten a spacing between the image stabilization bracket and the base, and helps implement thinning of the motor. In addition, the ball group can provide multi-point support for the image stabilization bracket. This helps disperse stress, prevents the ball from being deformed when the ball is collided due to excessively concentrated forces in a single direction, and can improve reliability of supporting mechanical parts such as the image stabilization bracket, the lens, and the like by the ball group.

In a possible implementation, the ball group includes a first ball group, a second ball group, and a third ball group, and the first ball group, the second ball group, and the third ball group are arranged triangularly. The first ball group, the second ball group, and the third ball group can provide multi-point support for the image stabilization bracket, to improve stability of a relative position relationship between the image stabilization bracket and the ball group, so that movement of the image stabilization bracket is more secure and reliable. In addition, in this implementation, positions of the ball groups are arranged according to a triangle stability principle, so that a quantity of ball groups in the motor can be reduced while reliability of the ball groups is ensured. This helps simplify a structure of the motor. In another embodiment, the ball group may not include the third ball group. Alternatively, the ball group may further include a fourth ball group. This is not limited in this application.

In a possible implementation, centers of the first ball group, the second ball group, and the third ball group are located in an optical axis direction of the lens. In this implementation, a center of the image stabilization bracket may alternatively be located on the optical axis of the lens. In other words, the centers of the first ball group, the second ball group, and the third ball group may be collinear with the center of the image stabilization bracket. This can avoid unnecessary loss and impact caused by deviation of the centers of the first ball group, the second ball group, and the third ball group from the center of the image stabilization bracket.

In a possible implementation, a diameter of the ball in the ball group is less than or equal to 0.3 millimeter. In this case, the motor in this implementation can reduce a spacing between the ball group and the image stabilization bracket while a support function of the ball is ensured, thereby helping implement thinning and miniaturization of the motor.

In a possible implementation, a friction coefficient between the ball group and the base is less than or equal to 0.06. This helps minimize friction resistance and friction heat that may be generated in a sliding process of the ball within an effective limited stroke, and improves abrasion resistance of balls and prolongs a service life of balls.

It may be understood that relative positions of the first ball group, the second ball group, and the third ball group, and design parameters such as a quantity and diameters of the balls in each ball group may be appropriately configured. In this way, a friction coefficient between the ball of the ball group and the base can be less than or equal to 0.06.

In a possible implementation, the motor further includes a metal piece, and the metal piece is fastened to the base. The image stabilization bracket is movably connected to the metal piece through at least two ball groups. The metal piece may be a steel sheet or the like. This is not limited in this application. The metal piece is disposed, and the ball group is movably connected to the metal piece, so that a friction force on the ball group during movement can be reduced, and smoothness of rolling of the ball can be improved. This helps improve a response rate when the image stabilization bracket is movably connected to the metal piece through the ball group.

In a possible implementation, the metal piece is embedded in the base, the base is provided with a groove, the metal piece is exposed relative to the base through the groove, and the ball group is located in the groove. The metal piece is embedded in the base, so that the metal piece can provide a hardness support function for the base, enhance strength of the base, and prevent deformation of the base. In addition, the ball group is disposed in the groove and is in contact with the metal piece, so that friction resistance on the ball group can be reduced while a compact arrangement between the ball group and the base can be improved, thereby facilitating miniaturization of the motor.

In a possible implementation, the motor further includes a sliding shaft, the sliding shaft is fastened to the image stabilization bracket, the focusing bracket is slidably connected to the image stabilization bracket through the sliding shaft, and the sliding shaft is made of a magnetically conductive material. The motor further includes a focusing magnetic attraction piece. The focusing magnetic attraction piece is fastened to the focusing bracket, and the focusing magnetic attraction piece is disposed close to the sliding shaft to generate a magnetic attraction force with the sliding shaft. The magnetic attraction force enables the focusing bracket to be attracted to the sliding shaft. It may be understood that the sliding shaft can guide a movement process of the focusing bracket. A magnetic attraction force between the focusing magnetic attraction piece and the sliding shaft is used, so that the focusing bracket can be closely attached to the sliding shaft, and the focusing bracket may move in an extension direction of the sliding shaft. This can avoid displacement of the focusing bracket in another direction in a focusing process and improve reliability of the focusing process. In addition, a driving force of the focusing bracket during movement only needs to overcome gravity of the focusing bracket, gravity of the lens and a friction force between the focusing bracket and the sliding shaft, and is not obviously associated with a movement stroke, so that large-stroke movement of the focusing bracket in the first direction can be implemented.

In some possible implementations, the motor further includes an image stabilization magnetic attraction piece, and the image stabilization magnetic attraction piece is fastened to the base and is disposed facing the first magnetic piece and the second magnetic piece, to generate a magnetic attraction force with the first magnetic piece and the second magnetic piece, so that the image stabilization bracket is attracted to the base. Magnetic attraction forces are generated between the image stabilization magnetic attraction piece and the first magnetic piece and between the image stabilization magnetic attraction piece and the second magnetic piece, so that the image stabilization bracket tends to approach the base, to ensure that the image stabilization bracket is in contact with the base, the ball group, and the image stabilization bracket in a movement process. This avoids a case in which the image stabilization bracket moves in the first direction in a movement process, and affects reliability and control precision of the motor.

In a possible implementation, the base includes the bottom plate and four fastening blocks, and the four fastening blocks are respectively fastened at four corners of the bottom plate. The motor further includes four elastic pieces. First ends of the four elastic pieces are fastened to the four fastening blocks in a one-to-one correspondence, and second ends of the four elastic pieces are fastened at four positions of the image stabilization bracket in a one-to-one correspondence. In other words, it may also be considered that the elastic pieces are correspondingly fastened to the four corners of the image stabilization bracket. The elastic piece is disposed, so that an elastic connection between the base and the image stabilization bracket can be implemented. When the image stabilization bracket moves relative to the base in the second direction, the four elastic pieces are elastically deformed, a direction of a combined force of restoring forces generated by the four elastic pieces is in a direction opposite to a direction in which the image stabilization bracket moves relative to the base. In this way, the image stabilization bracket is actuated to move reversely relative to the base, so that the image stabilization bracket moves back to an equilibrium position. This can improve motion linearity of the image stabilization bracket, and can also help maintain a center of the image stabilization bracket in an optical axis direction, and reliability and control precision of the motor are improved.

In a possible implementation, the fastening block is provided with an accommodating groove, and a middle portion of the elastic piece is located in the accommodating groove. The motor further includes a damping adhesive, and the damping adhesive is located in the accommodating groove and wraps a part of a middle portion of the elastic piece. When the image stabilization bracket moves relative to the base, because the middle portion of the elastic piece is located in the accommodating groove, and the damping adhesive is filled in the accommodating groove, the damping adhesive can play a role of oscillation suppression, and can further play a better role of shock absorption and buffering.

In a possible implementation, the fastening block includes a side surface and a top surface and a bottom surface that are disposed opposite to each other, and the side surface is connected between the top surface and the bottom surface. The motor includes a conductive piece, and a part of the conductive piece is embedded in the fastening block. The elastic piece is a conductive material, a first end of the elastic piece is bent and connected relative to the middle portion of the elastic piece, the middle portion of the elastic piece is disposed opposite to and spaced from the side surface of the fastening block, and the first end of the elastic piece is fastened to the conductive piece. It may be understood that the conductive piece may usually be a wire, a flexible printed circuit board, or the like. In this case, the first end of the elastic piece may be in contact with the top surface of the fastening block, so that the fastening block can provide a specific support force for the elastic piece, and the first end of the elastic piece can be electrically connected to the conductive piece. This avoids bending of the conductive piece and improves stability of an electrical connection in the motor.

In a possible implementation, the motor further includes a spring plate, and the spring plate is made of a conductive material. One end of the conductive piece is configured to electrically connect to the module circuit board, the other end of the conductive piece is electrically connected to the first end of the elastic piece, and the first end of the elastic piece is further electrically connected to the spring plate. In this case, the elastic piece may be used as a transmission channel between the spring plate and the conductive piece. For example, the spring plate includes a first conductive spring plate, a second conductive spring plate, a third conductive spring plate, and a fourth conductive spring plate, the conductive piece includes a first conductive piece, a second conductive piece, a third conductive piece, and a fourth conductive piece, and the four elastic pieces are respectively used as a transmission channel between the first conductive piece and the third conductive spring plate, a transmission channel between the second conductive piece and the fourth conductive spring plate, a transmission channel between the third conductive piece and the second conductive spring plate, and a transmission channel between the fourth conductive piece and the first conductive spring plate.

According to a second aspect, an implementation of this application further provides a camera module, including a lens, an image sensor, and the motor according to any one of the foregoing implementations. The lens is mounted in the motor, and the image sensor is located on a light exit side of the lens. The motor in the camera module in this implementation has a small volume, an overall structure is simple and compact, and large-stroke image stabilization can be implemented. This can save a space in the camera module while enabling the camera module to have high imaging quality.

In some possible implementations, the camera module further includes a variable-aperture stop, and the variable-aperture stop is located on a light entrance side of the lens. The variable-aperture stop has a stop opening, and a size of the stop opening is automatically adjusted. Light may enter the lens through the stop opening of the variable-aperture stop. The variable-aperture stop is configured to adjust an amount of light entering the lens, so that the camera module can maintain constant image shooting quality under a plurality of luminance conditions.

In a possible implementation, the camera module further includes a module circuit board, and the motor is fastened to the module circuit board. The motor and the image sensor are located on a same side of the module circuit board, and both the motor and the variable-aperture stop are electrically connected to the module circuit board.

According to a third aspect, an implementation of this application further provides an electronic device, including a device housing and the camera module according to any one of the foregoing implementations. The camera module is disposed in the device housing. The camera module has features such as miniaturization and good image shooting quality. This helps save an internal space of the electronic device while ensuring image shooting performance of the electronic device, and implements miniaturization of the electronic device.

### BRIEF DESCRIPTION OF DRAWINGS

The following describes accompanying drawings used in embodiments of this application.
FIG. 1a is a diagram of a structure of an electronic device according to an embodiment of this application;
FIG. 1b is a diagram of a partial cross section of the electronic device shown in FIG. 1a and cut along A-A in some embodiments;
FIG. 2 is a partial exploded diagram of a camera module shown in FIG. 1a in some embodiments;
FIG. 3 is a partial exploded diagram 1 of a motor shown in FIG. 2 in some embodiments;
FIG. 4 is a diagram of a partial structure of a base shown in FIG. 3;
FIG. 5 is a diagram of a cross-sectional structure of the partial structure of the base shown in FIG. 4 and cut along B-B;
FIG. 6 is a diagram 1 of a partial structure of a motor shown in FIG. 2;
FIG. 7 is an enlarged diagram of a structure at M in the motor shown in FIG. 6;
FIG. 8 is a diagram of a cross-sectional structure of the partial structure of the motor shown in FIG. 6 and cut along C-C;
FIG. 9 is a diagram of a structure of an image stabilization bracket shown in FIG. 3;
FIG. 10 is an exploded diagram 2 of a partial structure of a motor shown in FIG. 2;
FIG. 11 is a diagram of a cross-sectional structure of a partial structure of a motor shown in FIG. 2 and cut along D-D;
FIG. 12 is an exploded diagram 3 of a partial structure of a motor shown in FIG. 2;
FIG. 13 is a diagram 3 of the partial structure of the motor shown in FIG. 12;
FIG. 14 is a diagram of a cross-sectional structure of the partial structure of the motor shown in FIG. 13 and cut along E-E;
FIG. 15 is a diagram of a structure of a focusing bracket shown in FIG. 3;
FIG. 16 is a diagram 4 of a partial structure of a motor shown in FIG. 2;
FIG. 17 is an exploded diagram 4 of a partial structure of a motor shown in FIG. 2;
FIG. 18 is a diagram 5 of the partial structure of the motor shown in FIG. 17;
FIG. 19 is a diagram of a cross section of the partial structure of the motor shown in FIG. 18 along F-F;
FIG. 20 is a diagram 6 of a partial structure of a motor shown in FIG. 2;
FIG. 21 is a diagram 7 of a partial structure of a motor shown in FIG. 2;
FIG. 22 is a diagram of a structure of a motor shown in FIG. 2 from another perspective;
FIG. 23 is a diagram of a cross-sectional structure of the motor shown in FIG. 22 and cut along G-G;
FIG. 24 is a simplified force diagram of a partial structure in FIG. 23;
FIG. 25 is a diagram of a cross-sectional structure of the motor shown in FIG. 22 and cut along H-H;
FIG. 26 is a diagram of a partial structure of a line in which a focusing driver chip shown in FIG. 23 is electrically connected to an external structure according to an embodiment;
FIG. 27 is a diagram of the partial structure of the base shown in FIG. 4 according to an embodiment; and
FIG. 28 is a diagram of a partial structure of a line in which a motor shown in FIG. 2 is electrically connected to an external structure according to an embodiment.

### DESCRIPTION OF EMBODIMENTS

The following describes implementations of this application with reference to the accompanying drawings in the implementations of this application.

In descriptions of implementations of this application, it should be noted that the terms "mounting" and "connection" should be understood in a broad sense, unless otherwise specified and limited. For example, "connection" may be a detachable connection or a non-detachable connection, or may be a direct connection or a connection through an intermediate medium. "Fastened to" means a connection to each other with a changeless relative position relationship after the connection. "Movably connected" means a connection to each other and relative moving after the connection. "Slidably connected" means a connection to each other and relative sliding after the connection. In addition, obtaining an integrated structure of two components through an integral forming process means that, in a process of forming one of the two components, the component is connected to the other component, and the two components do not need to be connected through reprocessing (for example, bonding, welding, clamping, or screwing). Orientation terms mentioned in implementations of this application, for example, "above", "below", "inner", and "outer", merely indicate directions with reference to accompanying drawings. Therefore, the orientation terms are used to better and more clearly describe and understand implementations of this application, but not to indicate or imply that a specified apparatus or element needs to have a specific orientation or be constructed or operated in a specific orientation. Therefore, this cannot be construed as a limitation on implementations of this application. "A plurality of" means at least two.

In implementations of this application, the terms "first", "second", "third", "fourth", and the like are merely intended for a purpose of description, and shall not be understood as an indication or implication of relative importance or implicit indication of a quantity of indicated technical features. Therefore, a feature limited by "first", "second", "third", "fourth", or the like may explicitly or implicitly include one or more features.

In implementations of this application, "and/or" describes only an association relationship between associated objects and indicates that three relationships may exist. For example, A and/or B may indicate the following three cases: Only A exists, both A and B exist, and only B exists. In addition, a character "/" in this specification generally indicates an "or" relationship between associated objects.

In addition, in implementations of this application, a mathematical concept mentioned is parallel, vertical, or the like. These limitations are all for the current process level, but not for an absolute strict definition in the mathematical sense. A small deviation is allowed, which can be approximately parallel or perpendicular. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

It can be understood that specific implementations described herein are merely used to explain a related invention, but are not intended to limit the invention. In addition, it should be noted that, for ease of description, only a part related to the invention is shown in the accompanying drawings.

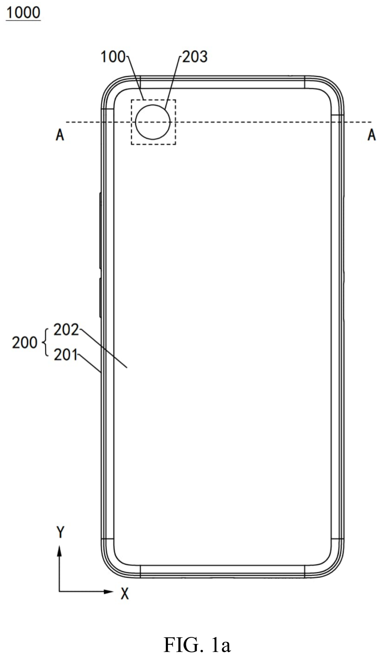

FIG. 1a is a diagram of a structure of an electronic device 1000 according to an embodiment of this application.

As shown in FIG. 1a, in some embodiments, the electronic device 1000 may be a device with an image shooting function like a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, a VR helmet, or the like. An example in which the electronic device 1000 in the embodiment shown in FIG. 1a is a mobile phone is used for description.

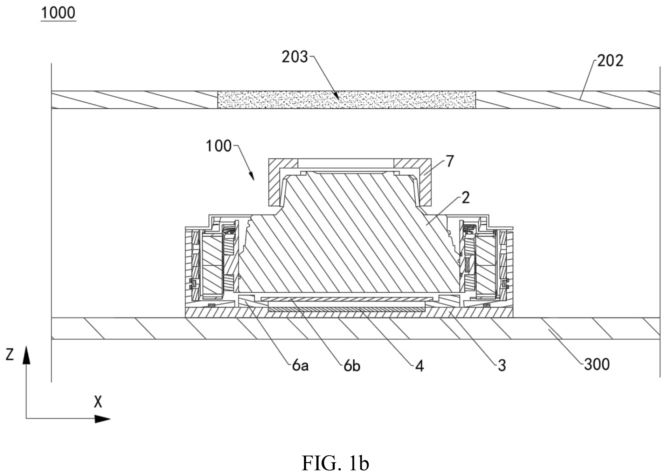

FIG. 1b is a diagram of a partial cross section of the electronic device 1000 shown in FIG. 1a and cut along A-A in some embodiments.

As shown in FIG. 1a and FIG. 1b, in some embodiments, the electronic device 1000 may include a camera module 100, a device housing 200, and a screen 300. The camera module 100 may be a rear-facing camera module, or may be a front-facing camera module. It should be noted that FIG. 1a and the following related accompanying drawings show only some components included in the electronic device 1000 as an example. Actual shapes, actual sizes, actual positions, and actual structures of these components are not limited by FIG. 1a and the following accompanying drawings. In addition, when the electronic device 1000 is a device in another form, the electronic device 1000 may not include the screen 300.

The device housing 200 may include a frame 201 and a rear cover 202, and the rear cover 202 is fastened to the frame 201. For example, the rear cover 202 may be fastened to the frame 201 through bonding, clamping, or the like. The rear cover 202 and the frame 201 may be alternatively an integrally formed structure, that is, the rear cover 202 and the frame 201 are an integral structure.

In some embodiments, the screen 300 may be located on a side that is of the frame 201 and that is away from the rear cover 202. In this case, the screen 300 and the rear cover 202 may be respectively located on two sides of the frame 201. The screen 300, the frame 201, and the rear cover 202 jointly enclose an interior of the electronic device 1000. The interior of the electronic device 1000 may be configured to place a component of the electronic device 1000, for example, a battery, a receiver, or a microphone. The screen 300 may be a flat screen, or may be a curved screen.

For example, the camera module 100 may be located in the interior of the electronic device 1000. The camera module 100 may be located on a side that is of the screen 300 and that faces the rear cover 202. The rear cover 202 may be provided with a light transmission hole 203. A shape of the light transmission hole 203 is not limited to a circle shown in FIG. 1a. The light transmission hole 203 communicates the interior of the electronic device 1000 with the exterior of the electronic device 1000. Light in the exterior of the electronic device 1000 may enter the interior of the electronic device 1000 through the light transmission hole 203. The camera module 100 may collect light that enters the interior of the electronic device 1000.

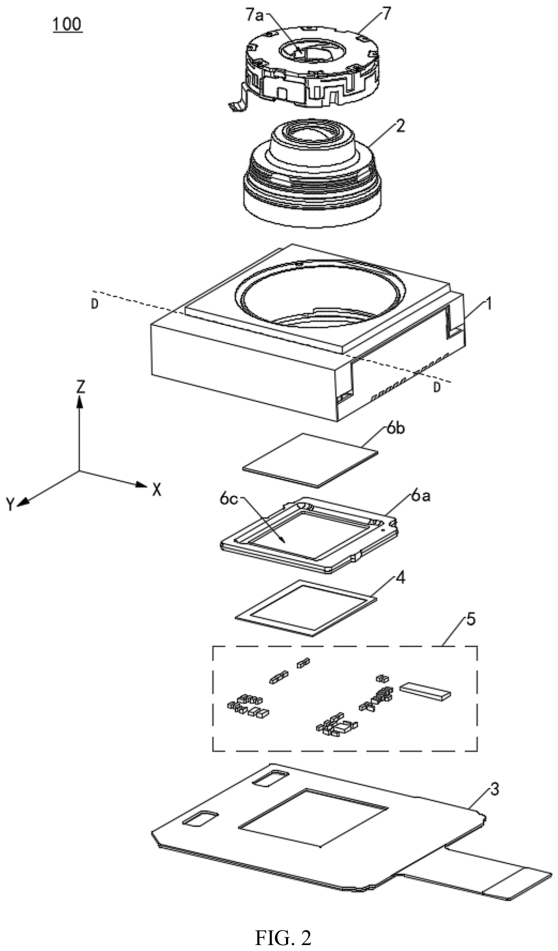

FIG. 2 is a partial exploded diagram of the camera module 100 shown in FIG. 1a in some embodiments.

As shown in FIG. 2, the camera module 100 includes a motor 1, a lens 2, a module circuit board 3, an image sensor 4, an electronic component 5, a light filter bracket 6a, a light filter 6b, and a variable-aperture stop 7. The image sensor 4 is also referred to as a photosensitive chip or a photosensitive element. The image sensor 4 is configured to: collect ambient light, and convert image information carried in the ambient light into an electrical signal. The electronic component 5 may be a component like a capacitor, an inductor, a resistor, or a chip. In FIG. 2, the electronic component 5 is schematically framed by using a dashed-line box.

It may be understood that the camera module 100 may further include fewer or more structures. For example, the camera module 100 may include fewer structures. For example, the camera module 100 may not include the electronic component 5, and/or the light filter bracket 6a, and/or the light filter 6b, and/or the variable-aperture stop 7.

It may be understood that, for ease of description, the following is defined. The camera module 100 has a first direction Z, a second direction X, and a third direction Y. The third direction Y may be a width direction of the camera module 100, the second direction X may be a length direction of the camera module 100, the second direction X is perpendicular to the third direction Y, the first direction Z may be a height direction of the camera module 100, and the first direction Z is perpendicular to the third direction Y and the second direction X. In another implementation, a coordinate system of the camera module 100 may be flexibly set based on a specific actual requirement.

As shown in FIG. 1b and FIG. 2, the image sensor 4 may be disposed on the module circuit board 3, and is electrically connected to the module circuit board 3. In this case, signals may be transmitted between the image sensor 4 and the module circuit board 3. In addition, the electronic component 5 is also fastened to the module circuit board 3, and is electrically connected to the module circuit board 3. In this case, signals may be transmitted between the electronic component 5 and the module circuit board 3.

For example, the light filter bracket 6a is fastened to the module circuit board 3. The light filter bracket 6a and the image sensor 4 are located on a same side of the module circuit board 3. The light filter bracket 6a is provided with a light transmission hole 6c. The light filter 6b is fastened to the light filter bracket 6a. The light filter 6b may be located in the light transmission hole 6c. The light filter 6b is further disposed opposite to the image sensor 4. The light filter 6b may be configured to filter infrared light, blue light, or the like in light before the light enters the image sensor 4, to ensure that the image sensor 4 has better imaging quality.

As shown in FIG. 1b, the motor 1 is fastened to the module circuit board 3. The motor 1 and the image sensor 4 are located on a same side of the module circuit board 3. The lens 2 is mounted on the motor 1. The image sensor 4 is located on a light exit side of the lens 2. It may be understood that the image sensor 4, the light filter 6b, and the lens 2 are sequentially arranged in the first direction Z. In this case, the image sensor 4 is located on the light exit side of the lens 2. The light filter 6b is located between the lens 2 and the image sensor 4.

It may be understood that the lens 2 may be configured to collect ambient light. An optical axis direction of the lens 2 may be parallel to the first direction Z of the camera module 100. The optical axis direction of the lens 2 and an optical axis direction of the camera module 100 are a same direction.

It may be understood that, compared with that in a solution in which the motor is fastened to the light filter bracket, in this embodiment, the motor 1 is fastened to the module circuit board 3, so that stacking of the motor 1 and the light filter bracket 6a in the first direction Z can be avoided. To be specific, the motor 1 and the light filter bracket 6a may be disposed in a staggered manner on an X-Y plane, to greatly reduce a height of the camera module 100.

It may be understood that the motor 1 may be a focusing motor. In this way, the motor 1 may control the lens 2 to move in the first direction Z, to implement auto focus (auto focus, AF). The motor 1 may alternatively be an image stabilization motor. In this way, the motor 1 may control the lens 2 to move along a plane (namely, the X-Y plane) perpendicular to the first direction Z. When the camera module 100 collects ambient light, if the electronic device 1000 shakes on the X-Y plane due to an external force, the motor 1 may be used to control movement of the lens 2 on the X-Y plane, to cancel a shake stroke generated by the lens 2 on the X-Y plane, so as to avoid or reduce a position offset of the lens 2 caused by shaking. In other words, the camera module 100 in this application may control movement of the lens 2 on the X-Y plane through the motor 1, to implement optical image stabilization (optical image stabilization, OIS) for the camera module 100, and improve imaging quality of the camera module 100. The motor 1 may alternatively be a motor 1 that integrates image stabilization and focusing. In this way, the motor 1 can implement auto focus by controlling the lens 2, and can also implement optical image stabilization by controlling the lens 2. In this implementation, an example in which the motor 1 is a motor 1 that integrates image stabilization and focusing is used for description.

As shown in FIG. 2, for example, the camera module 100 includes the variable-aperture stop 7. The variable-aperture stop 7 may be located on a light entrance side of the lens 2. The variable-aperture stop 7 has a stop opening 7a, and a size of the stop opening 7a may be automatically adjusted. Light may enter the lens 2 through the stop opening 7a of the variable-aperture stop 7. The variable-aperture stop 7 is configured to adjust an amount of light entering the lens, so that the camera module 100 can maintain constant image shooting quality under a plurality of luminance conditions.

The foregoing briefly describes the structure of the camera module 100 with reference to the related accompanying drawings. The following describes a structure of the motor 1 in detail with reference to related accompanying drawings.

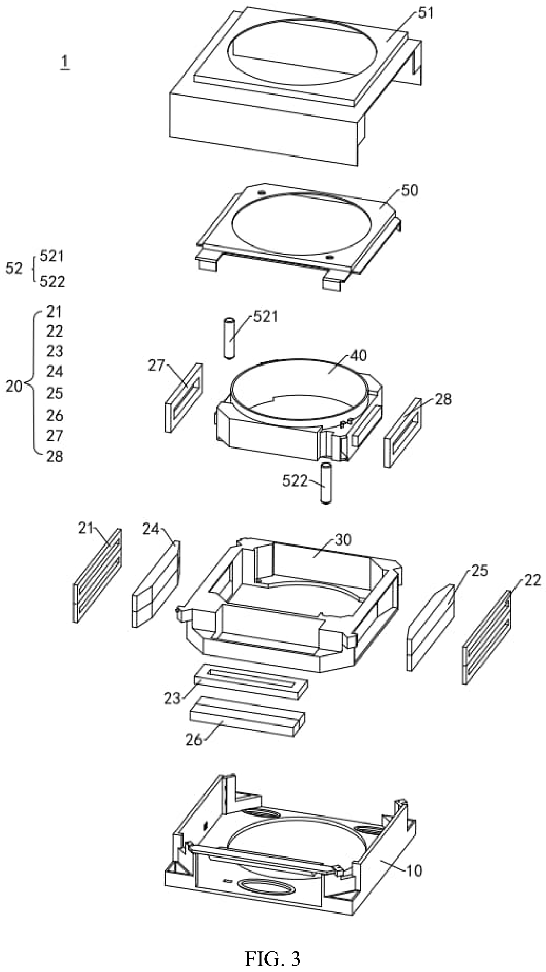

FIG. 3 is a partial exploded diagram 1 of the motor 1 shown in FIG. 2 in some embodiments.

As shown in FIG. 3, the motor 1 may include a base 10, a driving mechanism 20, an image stabilization bracket 30, a focusing bracket 40, a pressing plate 50, a housing 51, and a sliding shaft 52.

For example, the driving mechanism 20 may include a first image stabilization coil 21, a second image stabilization coil 22, a third image stabilization coil 23, a first magnetic piece 24, a second magnetic piece 25, a third magnetic piece 26, a first focusing coil 27, and a second focusing coil 28.

For example, there may be two sliding shafts 52 or another quantity of sliding shafts 52. For example, the sliding shaft 52 may include a first sliding shaft 521 and a second sliding shaft 522.

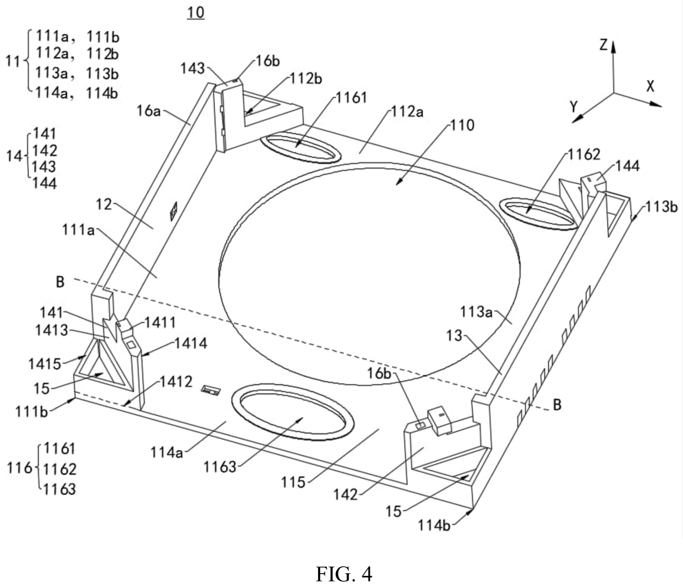

FIG. 4 is a diagram of a partial structure of the base 10 shown in FIG. 3.

As shown in FIG. 4, the base 10 may include a bottom plate 11, the bottom plate 11 may be approximately square, and the bottom plate 11 may include a first edge area 111a, a second corner area 112b, a second edge area 112a, a third corner area 113b, a third edge area 113a, a fourth corner area 114b, a fourth edge area 114a, and a first corner area 111b that are sequentially connected head to tail. The first edge area 111a and the second edge area 112a are disposed at an included angle, the third edge area 113a and the first edge area 111a are disposed opposite to each other, and the fourth edge area 114a and the second edge area 112a are disposed opposite to each other. For example, the first edge area 111a and the second edge area 112a may be disposed perpendicular to each other, the third edge area 113a may be parallel to the first edge area 111a, and the fourth edge area 114a may be parallel to the second edge area 112a.

For example, the bottom plate 11 may be provided with a first through hole 110, the bottom plate 11 has a first surface 115 and a second surface (not shown in FIG. 4) that are disposed opposite to each other in the first direction Z, the first through hole 110 may penetrate the first surface 115 and the second surface, and the first through hole 110 is located between the first edge area 111a and the third edge area 113a, and is located between the second edge area 112a and the fourth edge area 114a. In other words, the first edge area 111a, the second edge area 112a, the third edge area 113a, and the fourth edge area 114a are disposed around the first through hole 110.

For example, the bottom plate 11 may be further provided with a plurality of grooves 116, and the grooves 116 may be formed by internal recesses that are of the first surface 115 and that face the bottom plate 11. There may be three grooves 116, and the three grooves 116 may respectively be a first groove 1161, a second groove 1162, and a third groove 1163. The first groove 1161 and the second groove 1162 may be located in the second edge area 112a, and the third groove 1163 may be located in the fourth edge area 114a. The first groove 1161, the second groove 1162, and the third groove 1163 may be configured to mount a mechanical part in the motor 1. A plurality of grooves 116 are disposed in the bottom plate 11 to mount the mechanical part, and the mechanical part is at least partially embedded in the bottom plate 11, so that space occupied by the motor 1 in the first direction Z can be reduced. In addition, mechanical parts are compactly arranged, so that space utilization in the motor 1 can also be improved.

For example, a size of an opening of the first groove 1161 is consistent with a size of an opening of the second groove 1162, and a size of an opening of the third groove 1163 is greater than the size of the opening of the first groove 1161. The opening of the first groove 1161, the opening of the second groove 1162, and the opening of the third groove 1163 each may be approximately elliptical. In another embodiment, related designs such as the sizes, shapes, or extension directions of the openings of the first groove 1161, the second groove 1162, and the third groove 1163 may be adjusted as required. This is not limited in this application.

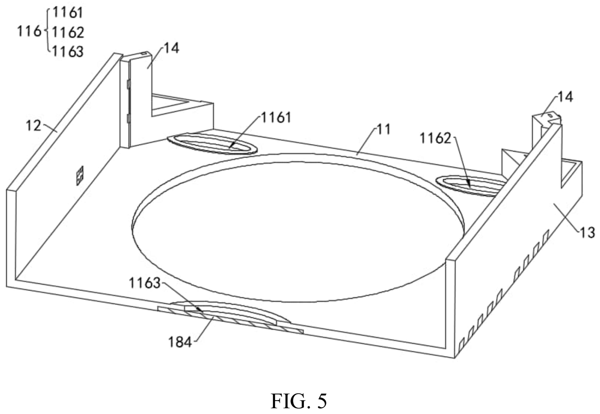

FIG. 5 is a diagram of a cross-sectional structure of the partial structure of the base 10 shown in FIG. 4 and cut along B-B.

As shown in FIG. 5, a metal piece 184 may be further disposed in the base 10, the metal piece 184 may be embedded in the bottom plate 11, and the metal piece 184 may be exposed relative to the base 10 through the groove 116. For example, the metal piece 184 may be embedded in the bottom plate 11, and is exposed relative to the bottom plate 11 through the third groove 1163. For a position relationship between the metal piece 184 and the first groove 1161 and a position relationship between the metal piece 184 and the second groove 1162, refer to the position relationship between the metal piece 184 and the third groove 1163. Details are not described herein again. In another embodiment, the metal piece 184 may alternatively be fastened to a surface of the bottom plate 11, and a part of the metal piece 184 is located in the groove 116. This is not limited in this application.

As shown in FIG. 4 and FIG. 5, for example, the base 10 may further include a first side plate 12, a second side plate 13, and four fastening blocks 14. The first side plate 12, the second side plate 13, and the four fastening blocks 14 are all fastened to the first surface 115, and the four fastening blocks 14 may include a first fastening block 141, a second fastening block 142, a third fastening block 143, and a fourth fastening block 144. The first fastening block 141, the first side plate 12, and the third fastening block 143 may be sequentially connected to form an integrated structure. The first fastening block 141 may be disposed corresponding to the first corner area 111b, the first side plate 12 may be disposed corresponding to the first edge area 111a, the third fastening block 143 may be disposed corresponding to the second corner area 112b, the first fastening block 141 and the first side plate 12 are disposed at an included angle, and the third fastening block 143 and the first side plate 12 are disposed at an included angle. The fourth fastening block 144, the second side plate 13, and the second fastening block 142 may be sequentially connected to form an integrated structure. The fourth fastening block 144 may be disposed corresponding to the third corner area 113b, the second side plate 13 may be disposed corresponding to the third edge area 113a, the second fastening block 142 may be disposed corresponding to the fourth corner area 114b, the fourth fastening block 144 and the second side plate 13 are disposed at an included angle, the second fastening block 142 and the second side plate 13 are disposed at an included angle, and the first fastening block 141 and the second fastening block 142 may be fastened to the bottom plate 11 and are spaced from each other. In another embodiment, the base 10 may not include the four fastening blocks 14, or the base 10 may not include the first side plate 12 or/and the second side plate 13, or there may be one, two, three, or more fastening blocks 14. This is not limited in this application.

For example, the first fastening block 141 may include a top surface 1411, a bottom surface 1412, an outer side surface 1413, and an inner side surface 1414. The top surface 1411 of the first fastening block 141 and the bottom surface 1412 of the first fastening block 141 may be disposed opposite to each other, the outer side surface 1413 of the first fastening block 141 and the inner side surface 1414 of the first fastening block 141 may be disposed opposite to each other, and both the outer side surface 1413 of the first fastening block 141 and the inner side surface 1414 of the first fastening block 141 are connected between the top surface 1411 of the first fastening block 141 and the bottom surface 1412 of the first fastening block 141. In addition, the outer side surface 1413 of the first fastening block 141 is located on a side that is of the first fastening block 141 and that is away from the first through hole 110. The second fastening block 142, the third fastening block 143, and the fourth fastening block 144 each may also include a top surface, a bottom surface, an outer side surface, and an inner side surface. Positions of the top surface, the bottom surface, the outer side surface, and the inner side surface in the corresponding second fastening block 142, third fastening block 143, or fourth fastening block 144, and the like, refer to the foregoing position relationship between the top surface 1411, the bottom surface 1412, the outer side surface 1413, and the inner side surface 1414 in the first fastening block 141. Details are not described in this application again.

For example, the fastening block 14 may be further provided with an accommodating groove 15. The accommodating groove 15 may be fastened to the bottom plate 11 and located on the side that is of the fastening block 14 and that is away from the first through hole 110. The first surface 115 and an opening direction of the accommodating groove 15 may be on a same side of the bottom plate 11. For example, the accommodating groove 15 may be located in a notch space 1415 enclosed by the first surface 115 of the bottom plate 11, the outer side surface 1413 of the first fastening block 14, and an end surface of the first side plate 12, and a bottom wall of the accommodating groove 15 may be located on the first surface 115 of the bottom plate 11. A side wall of the accommodating groove 15 may be located on the outer side surface 1413 of the first fastening block 141. In this embodiment of this application, there may be four accommodating grooves 15, and the four accommodating grooves 15 may be respectively disposed corresponding to the four fastening blocks 14. In other words, for a position relationship between the accommodating groove 15 and the corresponding second fastening block 142, third fastening block 143, or fourth fastening block 144, refer to the foregoing position relationship between the accommodating groove 15 and the first fastening block 141. Details are not described in this application.

For example, the base 10 may include an insulation body 16a and a conductive piece 16b. The conductive piece 16b may be embedded in the insulation body 16a, to form a plurality of transmission channels for signal transmission. The insulation body 16a may form a main body of the bottom plate 11, the first side plate 12, the second side plate 13, and the four fastening blocks 14, and there may be four, six, or another quantity of conductive pieces 16b. A plurality of conductive pieces 16b may be arranged in the bottom plate 11, the first side plate 12, the second side plate 13, and/or the four fastening blocks 14.

One end of the conductive piece 16b may be exposed relative to an end surface of the base 10, and is configured to electrically connect to the mechanical part in the motor 1. The other end of the conductive piece 16b may be exposed relative to a surface of the base 10, and is electrically connected to the module circuit board 3 (as shown in FIG. 2). In other words, the conductive piece 16b may be used as an electrical connection transmission channel between the mechanical part in the motor 1 and the module circuit board 3.

For example, an end portion of the conductive piece 16b may be exposed from an outer peripheral edge of the bottom plate 11, the end portion of the conductive piece 16b may be exposed from the first surface 115 of the bottom plate 11, the end portion of the conductive piece 16b may be exposed from the top surface 1411 of the fastening block 14, the end portion of the conductive piece 16b may be exposed from an inner surface of the first side plate 12, or the end portion of the conductive piece 16b may be exposed from an inner surface of the second side plate 13. In another embodiment, an area that is of the conductive piece 16b and that is exposed relative to the base 10 may be disposed as required. This is not limited in this application.

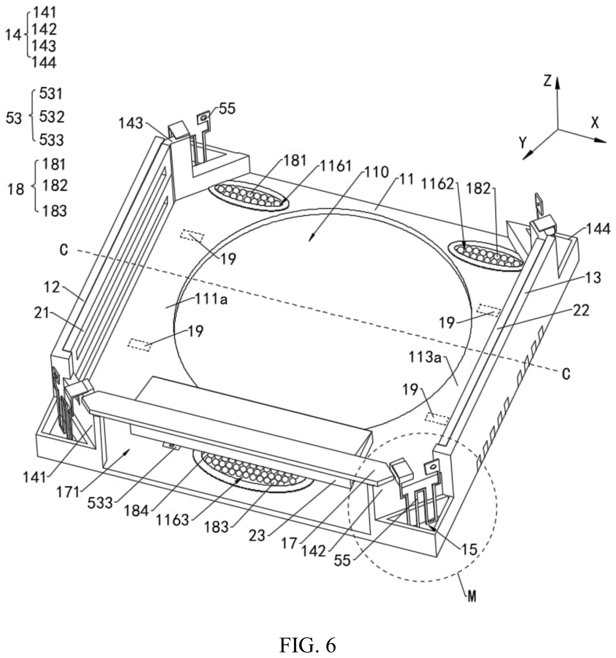

FIG. 6 is a diagram 1 of a partial structure of the motor 1 shown in FIG. 2.

As shown in FIG. 6, in some embodiments, the motor 1 may further include a ball group 18. The ball group 18 may include a first ball group 181, a second ball group 182, and a third ball group 183. Each ball group 18 may include a plurality of balls, and a quantity of balls may be five, sixteen, thirty-two, or the like. This is not limited in this application. Shapes, quantities, and sizes of the balls in the ball group 18 may be all the same or different. In this embodiment of this application, an example in which the shapes, the sizes, and the like of the balls in the ball group 18 are all the same, but quantities of balls in the first ball group 181, the second ball group 182, and the third ball group 183 are different is used for description. This is not limited in this application. In another embodiment, the motor 1 may not include the second ball group 182, or the ball group 18 may include a fourth ball group, or the like.

The first ball group 181 may be disposed in the first groove 1161. The ball of the first ball group 181 may roll in the first groove 1161. A part of the balls of the first ball group 181 may be located in the first groove 1161, and a part of the balls are located outside the first groove 1161.

In addition, the second ball group 182 may be disposed in the second groove 1162. The ball of the second ball group 182 may roll in the second groove 1162. A part of the balls of the second ball group 182 may be located in the second groove 1162, and a part of the balls are located outside the second groove 1162.

In addition, the third ball group 183 may be disposed in the third groove 1163. The ball of the third ball group 183 may roll in the third groove 1163. Apart of the balls of the third ball group 183 may be located in the third groove 1163, and a part of the balls are located outside the third groove 1163.

For example, the first ball group 181 may be further located in the first groove 1161, in contact with a surface of the metal piece 184, and connected to the metal piece 184 in a rolling manner. The second ball group 182 may be located in the second groove 1162, in contact with the metal piece 184, and connected to the metal piece 184 in a rolling manner. The third ball group 183 may be located in the third groove 1163, in contact with the metal piece 184, and connected to the metal piece 184 in a rolling manner.

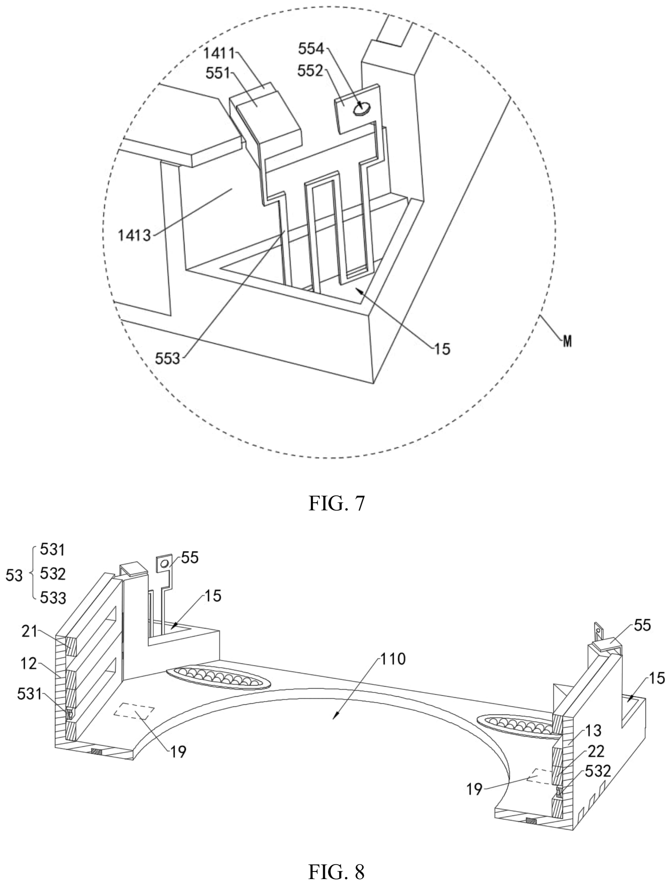

FIG. 7 is an enlarged diagram of a structure at M in the motor 1 shown in FIG. 6.

As shown in FIG. 6 and FIG. 7, in some embodiments, the motor 1 further includes an elastic piece 55, and the elastic piece 55 may be fastened to the fastening block 14. For example, there may be four elastic pieces 55, and the four elastic pieces 55 may be fastened to the four fastening blocks 14 in a one-to-one correspondence. The four elastic pieces 55 may all have a same shape and size, and the four elastic pieces 55 may use a same reference numeral. It may be understood that a quantity of elastic pieces 55 is not limited in this application.

For example, the elastic piece 55 may include a first end 551 of the elastic piece 55, a middle portion 553 of the elastic piece 55, and a second end 552 of the elastic piece 55, and the middle portion 553 of the elastic piece 55 may be bent and connected between the first end 551 of the elastic piece 55 and the second end 552 of the elastic piece 55.

For example, the first end 551 of the elastic piece 55 may be bent and connected relative to the middle portion 553 of the elastic piece 55, the middle portion 553 of the elastic piece 55 and the outer side surface 1413 of the fastening block 14 may be disposed opposite to each other and spaced apart, and the first end 551 of the elastic piece 55 may be fastened to a corresponding fastening block 14, to implement a fastening and support function of the base 10 on the elastic piece 55.

For example, the middle portion 553 of the elastic piece 55 may be located in the accommodating groove 15, the accommodating groove 15 may be filled with a damping material, and the damping material may wrap at least a part of the middle portion 553 of the elastic piece 55. The damping material may be a material having a specific elastic deformation capability, can play a role in oscillation suppression, and can also play a role in shock absorption and buffering. For example, the damping material may be a damping adhesive like rubber. When the elastic piece 55 is deformed due to an external force, the damping adhesive is deformed accordingly, and great internal friction is generated in the damping adhesive, to absorb and consume vibration energy brought by torque. Therefore, deformation of the elastic piece 55 is hindered, and vibration is attenuated. In addition, the damping adhesive has a stable damping characteristic and a fast response speed, so that the elastic piece 55 can quickly restore to a stable posture after being subject to a force. This also helps improve reliability of the motor 1.

For example, the second end 552 of the elastic piece 55 may be disposed on a same plane as the middle portion 553 of the elastic piece 55, and a mounting hole 554 may be provided in the second end 552 of the elastic piece 55.

As shown in FIG. 6, in some embodiments, the base 10 may further include a fastening plate 17. One end of the fastening plate 17 may be fastened to the first fastening block 141, and the other end of the fastening plate 17 may be fastened to the second fastening block 142. An accommodation space 171 may be enclosed between the bottom plate 11, the first fastening block 141, the second fastening block 142, and the fastening plate 17.

FIG. 8 is a diagram of a cross-sectional structure of the partial structure of the motor 1 shown in FIG. 6 and cut along C-C.

As shown in FIG. 6 and FIG. 8, for example, the first image stabilization coil 21 may be fastened to a side that is of the first side plate 12 and that faces the first through hole 110. In another embodiment, the base 10 may alternatively not include the first side plate 12. In this case, the first image stabilization coil 21 may be fastened between the first fastening block 141 and the third fastening block 143 through another mechanical part (for example, a circuit board).

For example, the motor 1 may further include a first position sensor 531. The first position sensor 531 may be fastened to the side that is of the first side plate 12 and that faces the first through hole 110. The first position sensor 531 is configured to implement position detection, and the first position sensor 531 may be a Hall effect sensor or a tunnel magnetoresistance sensor.

For example, the second image stabilization coil 22 may be fastened to a side that is of the second side plate 13 and that faces the first through hole 110. In another embodiment, the base 10 may alternatively not include the second side plate 13. The second image stabilization coil 22 may be fastened between the second fastening block 142 and the fourth fastening block 144 through another mechanical part (for example, a circuit board).

For example, the motor 1 may further include a second position sensor 532. The second position sensor 532 may be fastened to the side that is of the second side plate 13 and that faces the first through hole 110. The second position sensor 532 is configured to implement position detection, and the second position sensor 532 may be a Hall effect sensor or a tunnel magnetoresistance sensor.

For example, the third image stabilization coil 23 is fastened to a side that is of the fastening plate 17 and that faces the accommodation space 171. It may be understood that there is a specific spacing between the fastening plate 17 and the bottom plate 11. In another embodiment, the third image stabilization coil 23 may alternatively be fastened to a side that is of the bottom plate 11 and that faces the accommodation space 171. This is not limited in this application.

For example, the motor 1 may further include a third position sensor 533. The third position sensor 533 may be fastened to the bottom plate 11 in a manner like providing a groove on the surface of the bottom plate 11 and disposing the third position sensor 533 in the groove. The third position sensor 533 may be configured to implement position detection, and the third position sensor 533 may be a Hall effect sensor or a tunnel magnetoresistance sensor.

In some embodiments, the motor 1 further includes an image stabilization magnetic attraction piece 19. The image stabilization magnetic attraction piece 19 may be fastened to the bottom plate 11. The image stabilization magnetic attraction piece 19 may be made of a material that can generate a magnetic attraction force with a magnet or another magnetic component, for example, a ferromagnetic material. For example, there may be four image stabilization magnetic attraction pieces 19, the four image stabilization magnetic attraction pieces 19 may all have a same shape and size, and the four image stabilization magnetic attraction pieces 19 may use a same reference numeral. It may be understood that, in another embodiment, a quantity, shapes, sizes, and the like of image stabilization magnetic attraction pieces 19 may be set as required. This is not limited in this application.

For example, two image stabilization magnetic attraction pieces 19 may be spaced apart in the first edge area 111a, and the other two image stabilization magnetic attraction pieces 19 may be spaced apart in the third edge area 113a. In this embodiment of this application, an example in which the image stabilization magnetic attraction piece 19 is embedded in the bottom plate 11 is used for description. In another embodiment, the image stabilization magnetic attraction piece 19 can be fastened to the bottom plate 11 and is exposed relative to the first surface 115 of the bottom plate 11. This is not limited in this application.

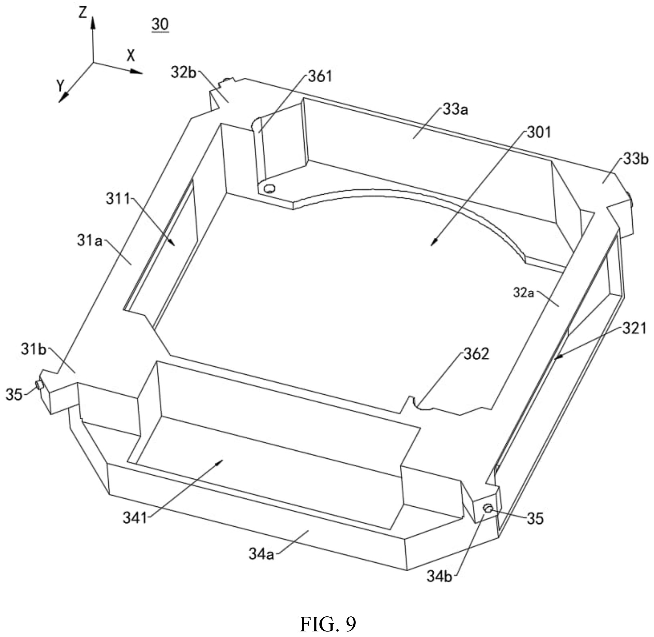

FIG. 9 is a diagram of a structure of the image stabilization bracket 30 shown in FIG. 3.

As shown in FIG. 8, the image stabilization bracket 30 may include the first edge portion 31a, the second corner portion 32b, the third edge portion 33a, the third corner portion 33b, the second edge portion 32a, the fourth corner portion 34b, the fourth edge portion 34a, and the first corner portion 31b that are sequentially connected head to tail. The third edge portion 33a and the first edge portion 31a are disposed at an included angle, the second edge portion 32a and the first edge portion 31a are disposed opposite to each other, the fourth edge portion 34a and the second edge portion 32a are disposed at an included angle, and a size of the fourth edge portion 34a in the third direction Y may be greater than a size of the third edge portion 33a in the third direction Y.

For example, the image stabilization bracket 30 may have a second through hole 301, the second through hole 301 penetrates the image stabilization bracket 30 in the first direction Z, and the second through hole 301 may be located between the first edge portion 31a and the second edge portion 32a, and is located between the third edge portion 33a and the fourth edge portion 34a. In other words, the first edge portion 31a, the second edge portion 32a, the third edge portion 33a, and the fourth edge portion 34a are disposed around the second through hole 301, and it is also considered that the second through hole 301 is located on an inner side of the image stabilization bracket 30.

For example, the first edge portion 31a may be provided with the first via 311, and the first via 311 may penetrate the first edge portion 31a in the second direction X, to communicate an inner side with an outer side of the image stabilization bracket 30. The second via 321 may be disposed on the second edge portion 32a, and the second via 321 may penetrate the second edge portion 32a in the second direction X, and can also communicate the inner side with the outer side of the image stabilization bracket 30.

For example, the fourth edge portion 34a may be provided with a first mounting groove 341, and the first mounting groove 341 may be located between the first corner portion 31b and the fourth corner portion 34b.

For example, the second corner portion 32b may be further provided with a first sliding slot 361, and the fourth corner portion 34b may be provided with a second sliding slot 362. The first sliding slot 361 and the second sliding slot 362 may be approximately considered to be at two opposite ends of the image stabilization bracket 30, and extension directions of the first sliding slot 361 and the second sliding slot 362 may be parallel to the first direction Z. In another embodiment, the second corner portion 32b may be provided with the first sliding slot 361, the third corner portion 33b may be provided with the second sliding slot 362, and the first sliding slot 361 and the second sliding slot 362 may be located on a same side of the image stabilization bracket 30 and are spaced apart. This is not specifically limited in this application.

For example, the image stabilization bracket 30 may further include positioning rods 35. There may be four positioning rods 35. The four positioning rods 35 may be respectively disposed on the first corner portion 31b, the second corner portion 32b, the third corner portion 33b, and the fourth corner portion 34b, and protrudes relative to outer surfaces of the first corner portion 31b, the second corner portion 32b, the third corner portion 33b, and the fourth corner portion 34b.

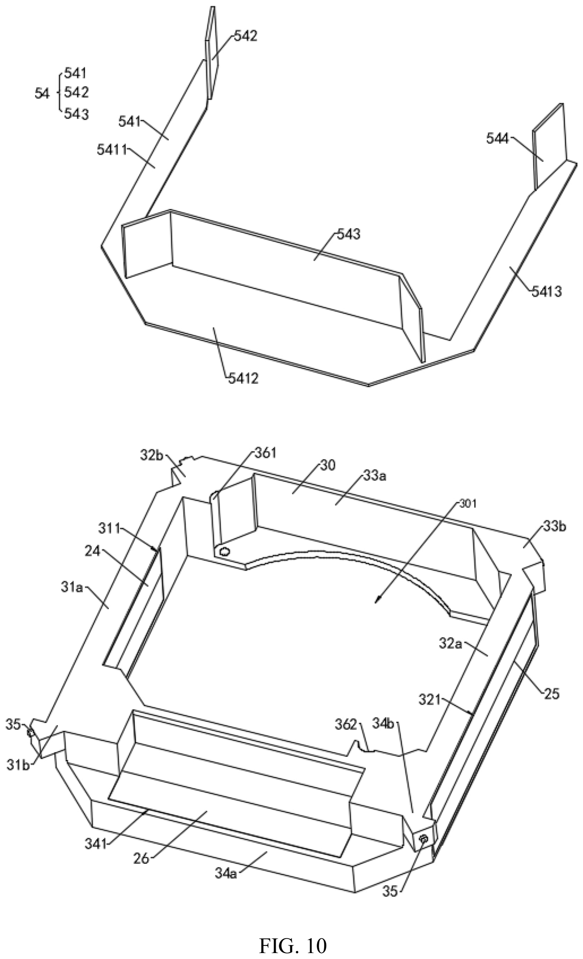

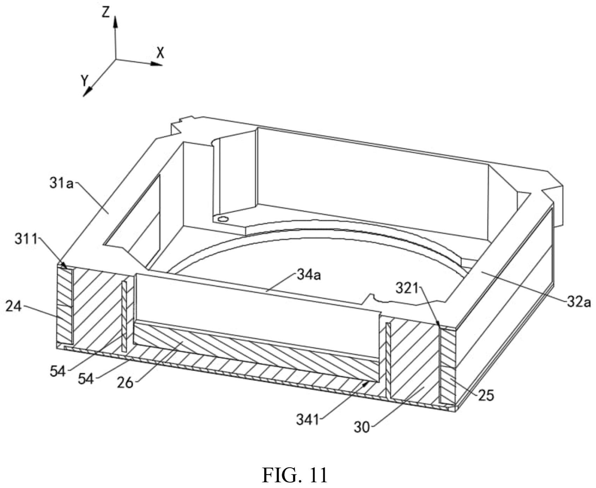

FIG. 10 is an exploded diagram 2 of a partial structure of the motor 1 shown in FIG. 2. FIG. 11 is a diagram of a cross-sectional structure of a partial structure of the motor 1 shown in FIG. 2 and cut along D-D.

As shown in FIG. 10 and FIG. 11, in some embodiments, the first magnetic piece 24 may be fastened to the first edge portion 31a and is at least partially located in the first via 311. The first magnetic piece 24 may be a magnet or another magnetic component. For example, the first magnetic piece 24 may be fastened to the first edge portion 31a in a manner like adhesive bonding. The first magnetic piece 24 is at least partially located in the first via 311. It may be considered that the first magnetic piece 24 is partially embedded in the first via 311, or the entire first magnetic piece 24 is embedded in the first via 311. This can help improve space utilization of the image stabilization bracket 30. In addition, compactness of structural arrangement of the first magnetic piece 24 and the image stabilization bracket 30 can be improved. In this embodiment of this application, an example in which the first magnetic piece 24 is completely embedded in the first via 311 is used for description. In another embodiment, the first via 311 may not be disposed in the first edge portion 31a, and the first magnetic piece 24 may be fastened to a surface of the first edge portion 31a. This is not limited in this application.

A shape of the first magnetic piece 24 may adapt to a shape of the first via 311, to improve tightness of connection between the first magnetic piece 24 and the first edge portion 31a, and fully use a space in the first via 311. For example, when the first via 311 is disposed in a trapezoidal shape, the first magnetic piece 24 may also be disposed in a trapezoidal shape. In another embodiment, when the first via 311 is disposed in a square shape, the first magnetic piece 24 is also disposed in a square shape.

As shown in FIG. 10 and FIG. 11, in some embodiments, the second magnetic piece 25 may be fastened to the second edge portion 32a and is at least partially located in the second via 321. The second magnetic piece 25 may be a magnet or another magnetic component. For example, the second magnetic piece 25 may be fastened to the second edge portion 32a in a manner like adhesive bonding. The second magnetic piece 25 is at least partially located in the second via 321. It may be considered that the second magnetic piece 25 is partially embedded in the second via 321, or the entire second magnetic piece 25 is embedded in the second via 321. This can help improve space utilization of the image stabilization bracket 30. In addition, compactness of structural arrangement of the second magnetic piece 25 and the image stabilization bracket 30 can be improved. In this embodiment of this application, an example in which the second magnetic piece 25 is completely embedded in the second via 321 is used for description. In another embodiment, the second edge portion 32a may not be provided with the second via 321, and the second magnetic piece 25 may be fastened to a surface of the second edge portion 32a. This is not limited in this application.

A shape of the second magnetic piece 25 may adapt to a shape of the second via 321, to improve tightness of connection between the second magnetic piece 25 and the second edge portion 32a, and effectively use a space in the second via 321. For example, when the second via 321 is disposed in a trapezoidal shape, the second magnetic piece 25 may also be disposed in a trapezoidal shape. In another embodiment, when the second via 321 is disposed in a square shape, the second magnetic piece 25 is also disposed in a square shape.

As shown in FIG. 10 and FIG. 11, in some embodiments, the third magnetic piece 26 may be mounted in the first mounting groove 341, to be fastened to the fourth edge portion 34a. For example, the third magnetic piece 26 may be fastened to a groove wall and/or a bottom wall of the first mounting groove 341 in a manner like adhesive bounding, and the third magnetic piece 26 is mounted in the first mounting groove 341. It may be considered that the third magnetic piece 26 is partially embedded in the first mounting groove 341. Alternatively, the entire third magnetic piece 26 is embedded in the first mounting groove 341 and is exposed relative to the first mounting groove 341. This helps improve space utilization of the image stabilization bracket 30, and can improve compactness of structural arrangement of the third magnetic piece 26 and the image stabilization bracket 30. The third magnetic piece 26 may be a magnet or another magnetic component.

In this embodiment, the first magnetic piece 24, the second magnetic piece 25, and the third magnetic piece 26 are respectively fastened to the first edge portion 31a, the second edge portion 32a, and the fourth edge portion 34a of the image stabilization bracket 30, and all use at least partially embedded fitting structures. In this way, an arrangement structure of the plurality of components is compact, and space utilization is high. When no other fitting component is disposed on the third edge portion 33a of the image stabilization bracket 30, a small size is maintained. For example, a width of the third edge portion 33a is less than a width of the first edge portion 31a and a width of the fourth edge portion 34a. This helps reduce a volume of the image stabilization bracket 30.

As shown in FIG. 10 and FIG. 11, for example, the motor 1 further includes a magnetic conductive piece 54. The magnetic conductive piece 54 may include a first plate 541, a second plate 542, a third plate 543, and a fourth plate 544. The second plate 542, the third plate 543, and the fourth plate 544 are connected on a same side of the first plate 541.

The first plate 541 includes a first portion 5411, a second portion 5412, and a third portion 5413 that are sequentially connected. The first portion 5411 and the third portion 5413 are disposed opposite to each other. In this way, the first plate 541 is roughly in a shape of "C". The second plate 542 is connected to the first portion 5411 of the first plate 541. The third plate 543 is connected to the second portion 5412 of the first plate 541. The fourth plate 544 is connected to the third portion 5413 of the first plate 541.

The first plate 541, the second plate 542, the third plate 543, and the fourth plate 544 are all embedded in the image stabilization bracket 30, the first portion 5411 of the first plate 541 is located at the bottom of the first magnetic piece 24, and the second portion 5412 of the first plate 541 is located at the bottom of the third magnetic piece 26. The third portion 5413 of the first plate 541 is located at the bottom of the second magnetic piece 25. The second plate 542 is located around the second magnetic piece 25. The third plate 543 is located around the third magnetic piece 26. The fourth plate 544 is located around the second magnetic piece 25.

It may be understood that the first portion 5411 of the first plate 541 cooperates with the second plate 542, to enhance magnetic field directivity of the first magnetic piece 24. The second portion 5412 of the first plate 541 cooperates with the third plate 543, to enhance magnetic field directivity of the third magnetic piece 26. The first portion 5411 of the first plate 541 cooperates with the fourth plate 544, to enhance magnetic field directivity of the second magnetic piece 25.

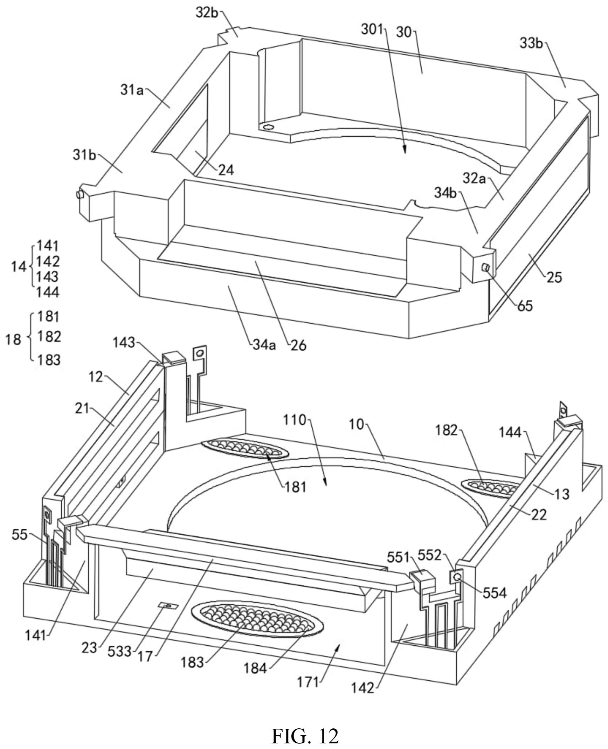

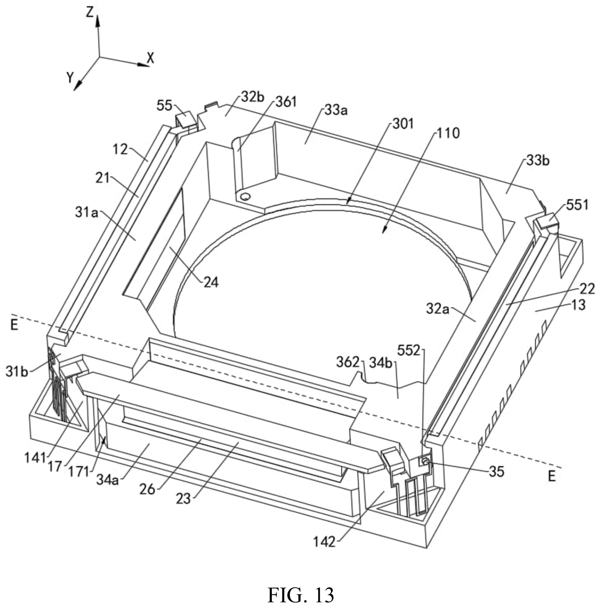

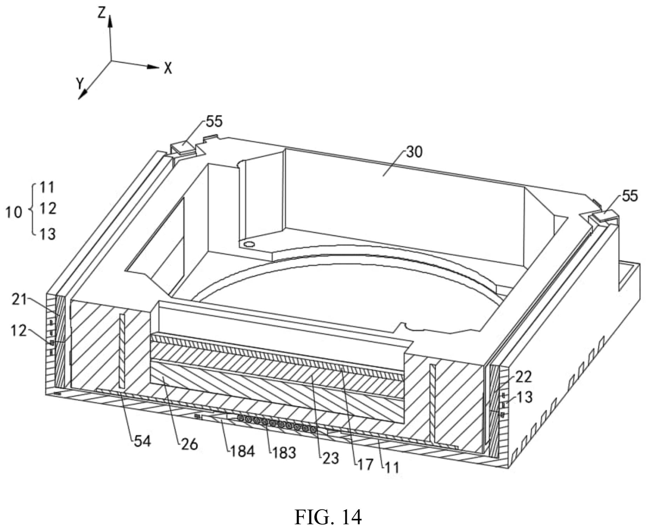

FIG. 12 is an exploded diagram 3 of a partial structure of the motor 1 shown in FIG. 2. FIG. 13 is a diagram 3 of a partial structure of the motor 1 shown in FIG. 12. FIG. 14 is a diagram of a cross-sectional structure of the partial structure of the motor shown in FIG. 13 and cut along E-E.

As shown in FIG. 12, FIG. 13, and FIG. 14, in some embodiments, the image stabilization bracket 30 may be movably connected to the base 10, the image stabilization bracket 30 may be located between the first side plate 12 and the second side plate 13, the first edge portion 31a is disposed opposite to the first side plate 12, the second edge portion 32a is disposed opposite to the second side plate 13, the first corner portion 31b is disposed corresponding to the first fastening block 141, the second corner portion 32b is disposed corresponding to the third fastening block 143, the third corner portion 33b is disposed corresponding to the fourth fastening block 144, and the fourth corner 34b is disposed corresponding to the second fastening block 142. In this case, the first magnetic piece 24 is disposed opposite to the first image stabilization coil 21, the second magnetic piece 25 is disposed opposite to the second image stabilization coil 22, and the third magnetic piece 26 is disposed opposite to the third image stabilization coil 23.

For example, the fourth edge portion 34a may at least partially extend into the accommodation space 171. This helps improve space utilization of the base 10 when the image stabilization bracket 30 is mounted on the base 10. This can also improve compactness of arrangement of the image stabilization bracket 30 and the base 10, and help implement miniaturization of the motor 1. In this case, the third magnetic piece 26 is disposed opposite to the third image stabilization coil 23, and at least a part of the third magnetic piece 26 can extend into the accommodation space 171.

For example, the first through hole 110 and the second through hole 301 at least partially overlap. In other words, it may also be considered that the image stabilization bracket 30 and the base 10 are disposed in a coaxial nested manner, to help improve arrangement compactness of mechanical parts in the motor 1. In addition, space utilization of the motor 1 can be improved, and miniaturization of the motor 1 can be implemented.

For example, the first end 551 of the elastic piece 55 is fastened to the fastening block 14, the second ends 552 of the four elastic pieces 55 are fastened to the four positioning rods 35 in a one-to-one correspondence, the positioning rods 35 may be inserted into the mounting holes 554, and an elastic connection between the elastic piece 55 and the image stabilization bracket 30 is implemented. When the image stabilization bracket 30 moves relative to the base 10 in the second direction X, the four elastic pieces 55 are elastically deformed, and a direction of a combined force of restoring forces generated by the four elastic pieces 55 is in a direction opposite to a direction in which the image stabilization bracket 30 moves relative to the base 10. In this way, the image stabilization bracket 30 is actuated to move reversely relative to the base 10, so that the image stabilization bracket 30 moves back to an equilibrium position. This can improve motion linearity of the image stabilization bracket 30, and can also help maintain a center of the image stabilization bracket 30 in an optical axis direction, and reliability and control precision of the motor 1 are improved. In another embodiment, the first end 551 of the elastic piece 55 may be configured to be bonded to the image stabilization bracket 30, and the second ends 552 of the four elastic pieces 55 are configured to be fastened to the four fastening blocks 14 in a one-to-one correspondence. This is not limited in this application. The positioning rod 35 may not be disposed on the image stabilization bracket 30, and the second end 552 of the elastic piece 55 is fastened to an outer surface of the image stabilization bracket 30 in another manner like adhesive bounding.

For example, the image stabilization bracket 30 may be movably connected to the base 10 through the first ball group 181, the second ball group 182, and the third ball group 183, and the image stabilization bracket 30 is connected to the base 10 in a rolling manner through the ball group 18. In this way, the image stabilization bracket 30 is movably connected to the base 10. In this implementation, the ball group 18 provides a support function, so that friction resistance between the ball and the image stabilization bracket 30 can be reduced while it is ensured that a sufficient support force is provided. This can improve smoothness of a movement process in which the image stabilization bracket 30 is movably connected to the base 10. In addition, the ball group 18 can provide multi-point support for the image stabilization bracket 30. This helps disperse stress, prevents the ball from being deformed when the ball is collided due to excessively concentrated forces in a single direction, and can improve reliability of supporting a mechanical part like the image stabilization bracket 30 by the ball group 18. In another embodiment, the ball group 18 may not be disposed in the motor 1, but a sliding shaft is disposed. A relative sliding process between the image stabilization bracket 30 and the base 10 is implemented through the sliding shaft. An axial direction of the sliding shaft is a guiding direction of the sliding shaft.

For example, the first ball group 181, the second ball group 182, and the third ball group 183 may be arranged triangularly. The first ball group 181, the second ball group 182, and the third ball group 183 can provide multi-point support for the image stabilization bracket 30, to improve stability of a relative position relationship between the image stabilization bracket 30 and the ball group 18, so that movement of the image stabilization bracket 30 is more secure and reliable. In addition, in this implementation, positions of the ball groups 18 are arranged according to a triangle stability principle, so that a quantity of ball groups 18 in the motor 1 can be reduced while reliability of the ball groups 18 is ensured. This helps simplify a structure of the motor 1. In another embodiment, the ball group 18 may include the first ball group 181 and the second ball group 182, but does not include the third ball group 183. Alternatively, the ball group 18 may include the first ball group 181, the second ball group 182, the third ball group 183, and a fourth ball group 18. This is not limited in this application.

For example, centers of the first ball group 181, the second ball group 182, and the third ball group 183 may be located in an optical axis direction of the lens 2. In this implementation, a center of the image stabilization bracket 30 may alternatively be located on the optical axis of the lens 2. In other words, the centers of the first ball group 181, the second ball group 182, and the third ball group 183 may be collinear with the center of the image stabilization bracket 30. It is also denoted that the image stabilization bracket 30 is in an equilibrium position relative to the base 10, so that unnecessary loss and impact caused by deviation of the centers of the first ball group 181, the second ball group 182, and the third ball group 183 from the center of the image stabilization bracket 30 can be avoided, for example, impact on control precision of a movement process of the image stabilization bracket 30 relative to the base 10.

For example, a diameter of a ball in the ball group 18 may be less than or equal to 0.3 millimeter. In this case, the motor 1 in this implementation can help reduce a spacing between the ball group 18 and the image stabilization bracket 30 while a support function of the ball is ensured, thereby helping implement thinning and miniaturization of the motor 1.

For example, a friction coefficient between the ball group 18 and the base 10 may be less than or equal to 0.06. This helps minimize friction resistance and friction heat that may be generated in a sliding process of the ball within an effective limited stroke, and improves abrasion resistance of balls and prolongs a service life of balls.

It may be understood that relative positions of the first ball group 181, the second ball group 182, and the third ball group 183, and design parameters such as a quantity and diameters of the balls in each ball group 18 are appropriately configured. In this way, a friction coefficient between the ball of the ball group 18 and the base 10 can be less than or equal to 0.06.

For example, the image stabilization bracket 30 may be movably connected to the metal piece 184 through at least two ball groups 18. The ball group 18 is disposed to be connected between the metal piece 184 and the image stabilization bracket 30 in a rolling manner, so that friction forces exerted on the ball group 18 in a rolling process can be reduced, a wear degree of the ball can be alleviated, and a service life of the ball can be prolonged. In addition, smoothness in a ball rolling process of the ball group 18 is improved. This helps improve a movement rate of the image stabilization bracket 30 when the image stabilization bracket 30 is movably connected to the metal piece 184 through the ball group 18, and helps improve a response speed of the motor 1. The metal piece 184 may be made of a material like a steel sheet. This is not limited in this application. In addition, the ball group 18 is disposed in the groove 116 and is in contact with the metal piece 184, so that compactness of arrangement between the ball group 18 and the base 10 can also be improved, strength of the base 10 can be enhanced, and deformation of the base 10 can be avoided.

For example, a lubricating piece may be further disposed in the motor 1. For example, the lubricating piece may be lubricating oil. Friction forces in a ball rolling process can also be effectively reduced by coating a surface of the ball with the lubricating oil, and noise generated during ball rolling is reduced and a wear degree of the ball is relieved. In another embodiment, the motor 1 may not include the metal piece 184, or the motor 1 may not include the metal piece 184 and the lubricating piece. This is not limited in this application.

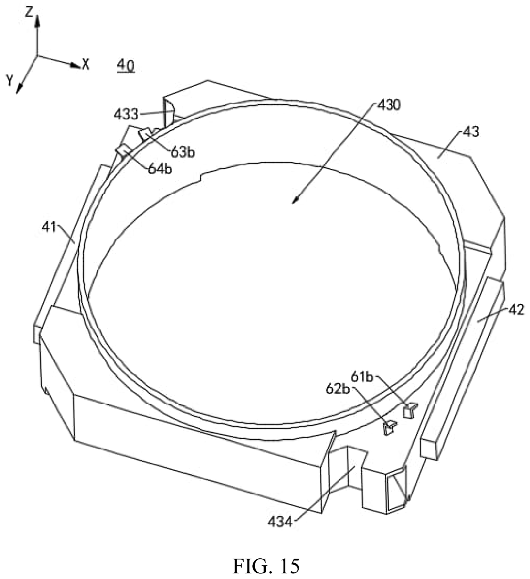

FIG. 15 is a diagram of a structure of the focusing bracket 40 shown in FIG. 3.

As shown in FIG. 15, the focusing bracket 40 may be generally frame-shaped. The focusing bracket 40 may include a first protrusion 41, a second protrusion 42, and a bracket body 43. A third through hole 430 may be disposed in the bracket body 43, and the first protrusion 41 and the second protrusion 42 may be located on two opposite sides of the bracket body 43 and protrude relative to an outer surface of the bracket body 43. For example, the bracket body 43, the first protrusion 41, and the second protrusion 42 may jointly form an integrally formed mechanical part. This is not limited in this application.

For example, a second mounting groove, a third mounting groove, a third sliding slot 433, and a fourth sliding slot 434 may be further disposed on the bracket body 43. The third sliding slot 433 and the fourth sliding slot 434 are located on two opposite sides of the third through hole 430, the third sliding slot 433 is close to the first protrusion 41 relative to the fourth sliding slot 434, the second mounting groove and the third sliding slot 433 are spaced apart and are located on a same side of the third through hole 430, and the third mounting groove and the fourth sliding slot 434 are spaced apart and are located on a same side of the third through hole 430. Extension directions of the third sliding slot 433 and the fourth sliding slot 434 may be parallel to the first direction Z, and both an opening direction of the second mounting groove and an opening direction of the third mounting groove are set to be opposite to the third through hole 430.

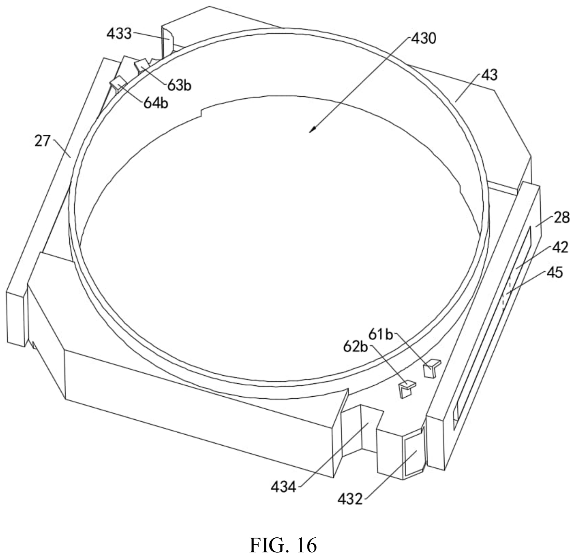

FIG. 16 is a diagram 4 of a partial structure of the motor 1 shown in FIG. 2.

As shown in FIG. 15 and FIG. 16, in some embodiments, the first focusing coil 27 may be fastened to the first protrusion 41, and at least a part of the first protrusion 41 is located in the first focusing coil 27. The second focusing coil 28 may be fastened to the second protrusion 42, and at least a part of the second protrusion 42 is located in the second focusing coil 28. It may be understood that, at least a part of the first protrusion 41 is disposed in the first focusing coil 27, so that the first protrusion 41 can effectively use an inner space of the first focusing coil 27 while providing a specific support force for the first focusing coil 27, and compactness of structural arrangement between the first focusing coil 27 and focusing is improved. In another embodiment, the focusing bracket 40 may not include the first protrusion 41 and the second protrusion 42, and the first focusing coil 27 and the second focusing coil 28 may be fastened to the focusing bracket 40 in a manner like providing a groove on a surface of the focusing bracket 40. In this case, a groove may be disposed on the surface of the focusing bracket 40, and the first focusing coil 27 and the second focusing coil 28 are disposed in the groove, so that the first focusing coil 27 and the second focusing coil 28 are fastened to the focusing bracket 40.

For example, the motor 1 may further include a focusing magnetic attraction piece 432. The focusing magnetic attraction piece 432 may be fastened to the focusing bracket 40. The focusing magnetic attraction piece 432 may be made of a material that can generate a magnetic attraction force with a magnet or another magnetic component, for example, a ferromagnetic material.

There may be two or another quantity of focusing magnetic attraction pieces 432. Shapes and sizes of the two focusing magnetic attraction pieces 432 may be the same, and the focusing magnetic attraction pieces 432 may use a same reference numeral. In another embodiment, shapes and sizes of the two focusing magnetic attraction pieces 432 may be different.

The two focusing magnetic attraction pieces 432 may be respectively mounted in the second mounting groove and the third mounting groove, and the focusing magnetic attraction piece 432 may be mounted in the second mounting groove and/or the third mounting groove through adhesive bonding, in-film injection molding, or the like. This is not limited in this application.

For example, the motor 1 may further include a focusing driver chip 45. The focusing driver chip 45 may be fastened to the focusing bracket 40. In a process in which the focusing bracket 40 moves, the focusing driver chip 45 can effectively, timely, and accurately detect a position change of the focusing bracket 40. In addition, the focusing driver chip 45 can further implement a function like communication or data storage.

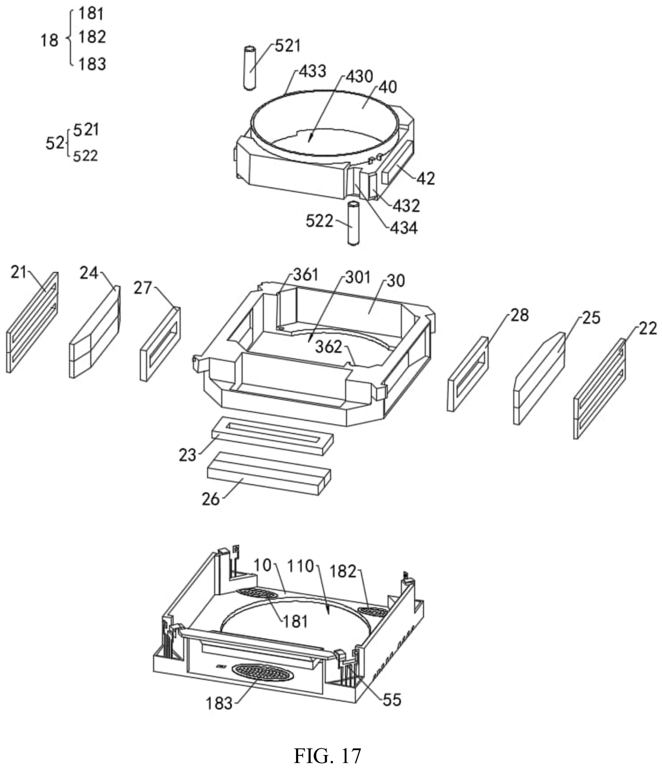

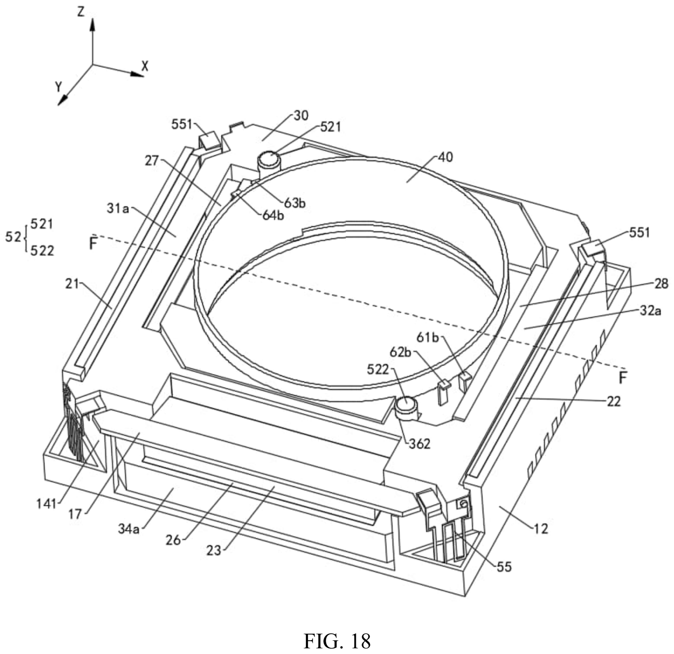

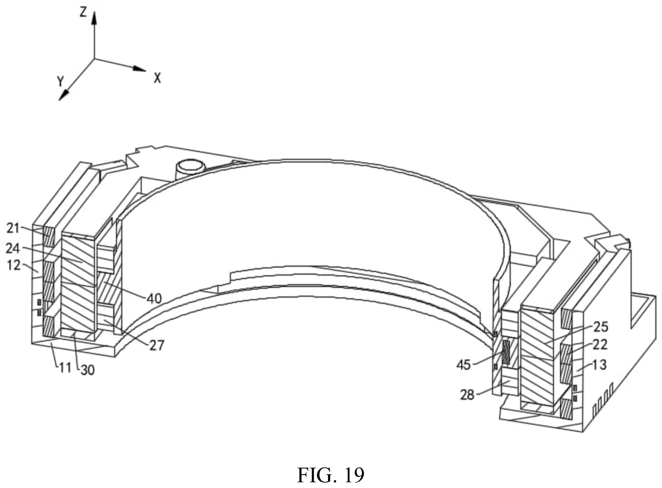

FIG. 17 is an exploded diagram 4 of a partial structure of the motor 1 shown in FIG. 2. FIG. 18 is a diagram 5 of a partial structure of the motor 1 shown in FIG. 17. FIG. 19 is a diagram of a cross-sectional structure of the partial structure of the motor 1 shown in FIG. 18 and cut along F-F.

As shown in FIG. 17, FIG. 18, and FIG. 19, in some embodiments, the focusing bracket 40 may be mounted on an inner side of the image stabilization bracket 30. In this case, the third through hole 430 of the focusing bracket 40 may be configured to mount the lens 2 (as shown in FIG. 2), a central axis of the focusing bracket 40 is parallel to an optical axis of the lens 2, and the third through hole 430 at least partially overlaps the first through hole 110 and the second through hole 301. Alternatively, it may be considered that the focusing bracket 40, the image stabilization bracket 30, and the base 10 are disposed in a coaxial nested manner. This helps improve arrangement compactness of mechanical parts in the motor 1, and can also improve space utilization of the motor 1, thereby helping implement miniaturization of the motor 1.

For example, the first focusing coil 27 may be disposed facing the first magnetic piece 24, and the first image stabilization coil 21, the first magnetic piece 24, and the first focusing coil 27 may be sequentially arranged in the second direction X.

The second focusing coil 28 may be disposed facing the second magnetic piece 25. Specifically, the second focusing coil 28, the second magnetic piece 25, and the second image stabilization coil 22 may be sequentially arranged in the second direction X.

For example, the sliding shaft 52 may be made of a magnetically conductive material, and the focusing magnetic attraction piece 432 may be disposed close to the sliding shaft 52, to generate a magnetic attraction force with the sliding shaft 52, so that the focusing bracket 40 is attracted to the sliding shaft 52. It may be understood that the sliding shaft 52 can guide a movement process of the focusing bracket 40. A magnetic attraction force between the focusing magnetic attraction piece 432 and the sliding shaft 52 is used, so that the focusing bracket 40 can be closely attached to the sliding shaft 52, and the focusing bracket 40 may move in an extension direction of the sliding shaft 52, to avoid displacement of the focusing bracket 40 in another direction in a focusing process. This can improve reliability of the focusing process. In addition, a driving force of the focusing bracket 40 during movement only needs to overcome gravity of the focusing bracket 40, gravity of the lens 2, and a friction force between the focusing bracket 40 and the sliding shaft 52, and is not obviously associated with a movement stroke, so that large-stroke movement of the focusing bracket 40 in the first direction Z can be implemented.

For example, the third sliding slot 433 is disposed corresponding to the first sliding slot 361, and the fourth sliding slot 434 is disposed corresponding to the second sliding slot 362. The first sliding shaft 521 is mounted in the third sliding slot 433 and is at least partially embedded in the first sliding slot 361, and the second sliding shaft 522 is mounted in the fourth sliding slot 434 and is at least partially embedded in the second sliding slot 362. One end of the sliding shaft 52 may be fastened to the image stabilization bracket 30 through bonding, a screw, or the like. The focusing bracket 40 is slidably connected to the image stabilization bracket 30 through the sliding shaft 52, and relative sliding directions of the focusing bracket 40 and the image stabilization bracket 30 are parallel to a guiding direction of the sliding shaft 52, namely, the first direction Z. An axial direction of the sliding shaft 52 is the guiding direction of the sliding shaft 52. In another embodiment, a ball may also be used between the focusing bracket 40 and the image stabilization bracket 30 to implement a guiding function. This is not limited in this application.

It may be understood that an inner wall of the third sliding slot 433 may adapt to an outer side surface of the first sliding shaft 521. For example, when an outer surface of the first sliding shaft 521 is arc-shaped, an inner surface of the third sliding slot 433 is also arc-shaped, to increase a contact size between the third sliding slot 433 and the first sliding shaft 521. It may also be considered that the third sliding slot 433 is tightly connected to the first sliding shaft 521. An inner surface of the fourth sliding slot 434 may be "L-shaped, V-shaped, or the like." This can reduce processing difficulty of the focusing bracket 40, and it may also be considered that the fourth sliding slot 434 is loosely connected to the second sliding shaft 522. The shapes of the surfaces of the third sliding slot 433 and the fourth sliding slot 434 are set, to implement a tight fitting design and a loose fitting design between the focusing bracket 40 and the two sliding shafts 52, so that overall assembly difficulty is reduced while a degree of fitting between the focusing bracket 40 and the sliding shaft 52 is ensured.

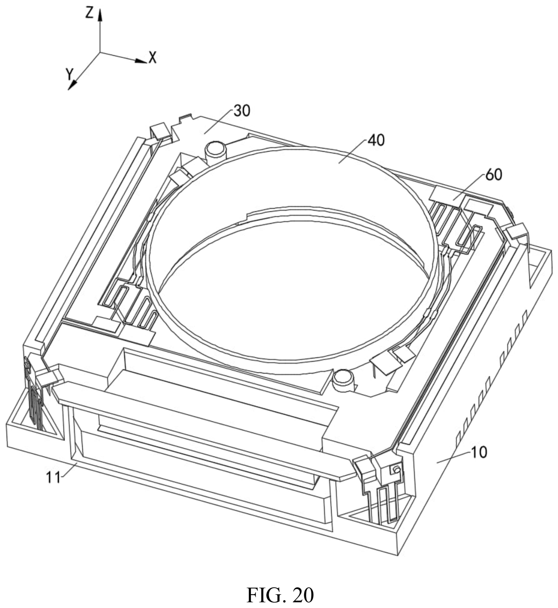

FIG. 20 is a diagram 6 of a partial structure of the motor 1 shown in FIG. 2.

As shown in FIG. 20, in some embodiments, the motor 1 further includes a spring plate 60. A plane in which the spring plate 60 is arranged may be perpendicular to the first direction Z, and is located on a side that is of the focusing bracket 40 and that faces away from the bottom plate 11. In other words, the spring plate 60 may be arranged on an X-Y plane. The spring plate 60 may be connected to the focusing bracket 40 and the base 10. The spring plate 60 has a specific deformation capability, and can deform when the focusing bracket 40 moves relative to the image stabilization bracket 30 and leaves an equilibrium position, to ensure reliability of connections between the spring plate 60 and the focusing bracket 40 and between the spring plate 60 and the base 10. In some embodiments, the spring plate 60 may be made of a conductive material, to consider a signal transmission function.

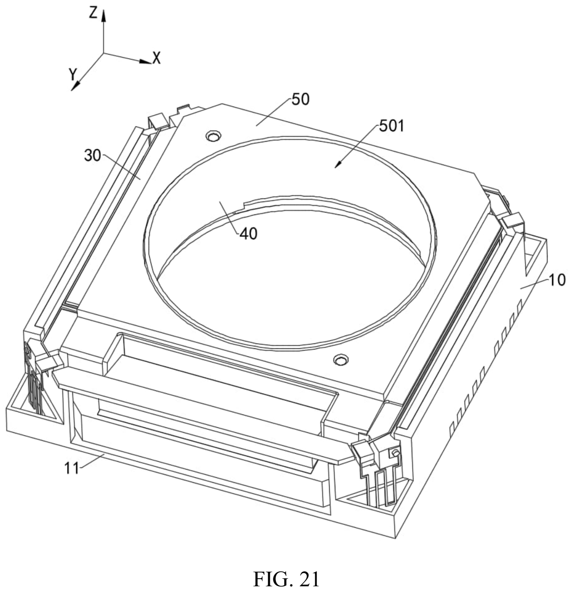

FIG. 21 is a diagram 7 of a partial structure of the motor 1 shown in FIG. 2.

As shown in FIG. 21, in some embodiments, the pressing plate 50 may be fastened to a side that is of the image stabilization bracket 30 and that faces away from the bottom plate 11, and is configured to limit a movement range of the focusing bracket 40 in the first direction Z, to prevent the focusing bracket 40 from being detached from the image stabilization bracket 30. This ensures reliability of movement of the focusing bracket 40 relative to the image stabilization bracket 30 in the first direction Z. The pressing plate 50 is provided with a fourth through hole 501, and a part of a structure of the focusing bracket 40 is exposed through the fourth through hole 501.

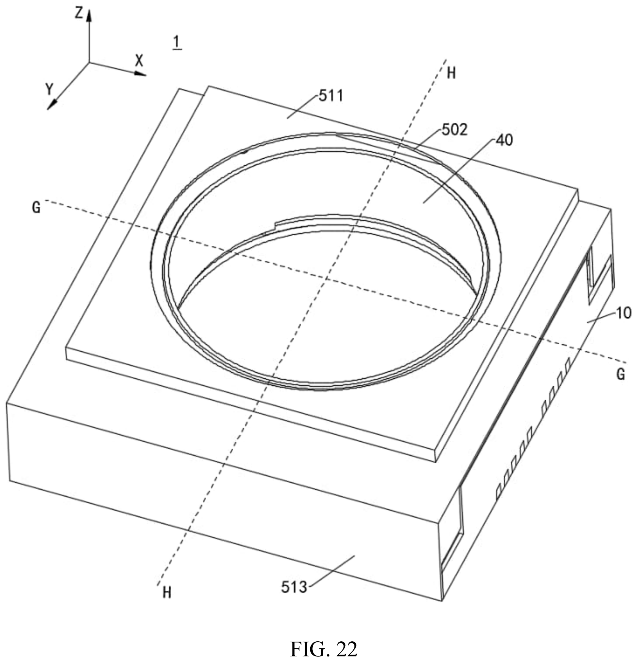

FIG. 22 is a diagram of a structure of the motor 1 shown in FIG. 2 from another perspective.

As shown in FIG. 21 and FIG. 22, in some embodiments, the housing 51 may cover the base 10, and the housing 51 cooperates with the base 10 to form an outer profile of the motor 1, to protect an internal structure of the motor 1. The housing 51 is provided with a fifth through hole 502, and a partial structure of the motor 1, for example, an inner surface of the focusing bracket 40, is exposed through the fifth through hole 502.

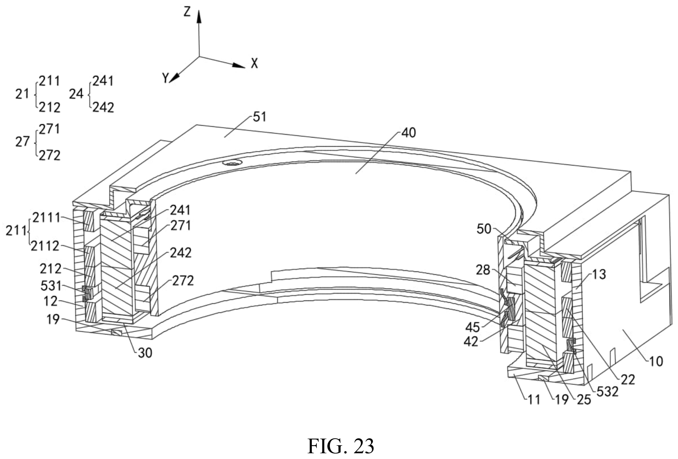

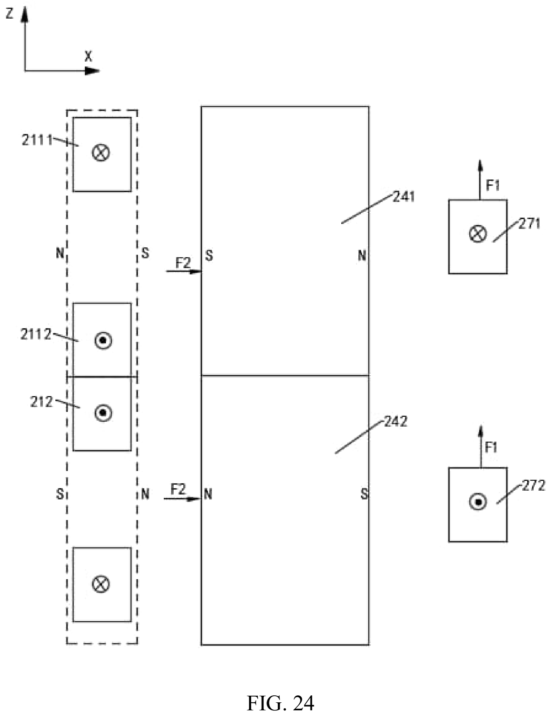

FIG. 23 is a diagram of a cross-sectional structure of the motor 1 shown in FIG. 22 and cut along G-G, and FIG. 24 is a simplified force diagram of a partial structure in FIG. 23.

As shown in FIG. 23, in some embodiments, the first focusing coil 27 may be disposed corresponding to the first magnetic piece 24 to form a first focusing driving group, and the first focusing driving group may be configured to drive the focusing bracket 40 to move relative to the image stabilization bracket 30 in the first direction Z, to actuate the lens 2 to move in the first direction Z, so as to implement a focusing function of the motor 1. That the first focusing coil 27 is disposed corresponding to the first magnetic piece 24 means that a winding plane of the first focusing coil 27 faces the first magnetic piece 24. For example, the winding plane of the first focusing coil 27 may be parallel to the first direction Z, and the first focusing coil 27 is vertically disposed. This helps reduce a size of the motor 1 in the second direction X, and implement miniaturization of the motor 1.

In this embodiment, in a process in which the focusing bracket 40 moves relative to the image stabilization bracket 30 in the first direction Z, the first direction Z is perpendicular to a magnetic gap between the first magnetic piece 24 and the first focusing coil 27, and a width of the magnetic gap is not affected by movement of the focusing bracket 40. This can avoid impact on a first driving force F1 (a driving force that is in the motor 1 and that is used to drive the focusing bracket 40 to move relative to the image stabilization bracket 30 in the first direction Z is denoted as the first driving force F1) caused by a change of the magnetic gap. For example, when the magnetic gap increases, the first driving force F1 decreases rapidly. This can effectively ensure stability and reliability of the first driving force F1 of the motor 1, and help ensure reliability of a focusing process of the motor 1.

As shown in FIG. 23, for example, the first magnetic piece 24 may include one or more magnets, and the first magnetic piece 24 may have a plurality of implementation structures. For example, in some embodiments, the first magnetic piece 24 may use a dual-magnet solution. For example, the first magnetic piece 24 includes two magnets. The two magnets may be a first magnet 241 and a second magnet 242, the first magnet 241 and the second magnet 242 may be arranged in the first direction Z, and a polarity direction of the first magnet 241 is opposite to a polarity direction of the second magnet 242, and is parallel to the second direction X. In some other embodiments, the first magnetic piece 24 may be a Halbach magnet array. In some other embodiments, the first magnetic piece 24 may use a single magnet solution, for example, include one magnet. The magnet includes two portions with opposite polarity directions. The magnet may be made through a bipolar magnetization process.

As shown in FIG. 23, in some embodiments, the first image stabilization coil 21 may be disposed corresponding to the first magnetic piece 24 to form a first image stabilization driving group, and the first image stabilization driving group may be configured to drive the image stabilization bracket 30 to actuate the focusing bracket 40 to move relative to the base 10 in the second direction X, so as to actuate the lens 2 to move in the second direction X. This implements an image stabilization function of the motor 1. The first focusing driving group and the first image stabilization driving group may share a magnetic field generated by the first magnetic piece 24, and the first magnetic piece 24 may cooperate with the first focusing coil 27 to control movement of the focusing bracket 40, and may further cooperate with the first image stabilization coil 21 to control the image stabilization bracket 30 to actuate the focusing bracket 40 to move. For example, a winding plane of the first image stabilization coil 21 may be parallel to the first direction Z. In other words, the first image stabilization coil 21 may be vertically disposed. This helps reduce a size of the motor 1 in the second direction X, and implement miniaturization of the motor 1.

The first image stabilization coil 21, the first magnetic piece 24, and the first focusing coil 27 in the motor 1 in this implementation are sequentially arranged in the second direction X. The motor 1 in this implementation can save a space in the first direction Z. In addition, the space of the motor 1 in the first direction Z can also be fully used. This helps improve utilization of an internal space of the motor 1, makes a structure of the motor 1 more compact, and helps implement thinning and miniaturization of the motor 1. In addition, when the first magnetic piece 24 is located between the first image stabilization coil 21 and the first focusing coil 27, the first magnetic piece 24 may isolate the first image stabilization coil 21 from the first focusing coil 27. This avoids mutual interference caused by mutual superposition of magnetic fields generated after the first image stabilization coil 21 and the first focusing coil 27 are energized, and avoids a crosstalk phenomenon that affects control precision of a focusing process and an image stabilization process, thereby affecting reliability of the motor 1.

In other words, the motor 1 in this implementation is an integrated motor 1 that has both an image stabilization function and a focusing function, and the focusing bracket 40 is located on an inner side of the image stabilization bracket 30. Compared with a split motor in which the image stabilization bracket 30 and the focusing bracket 40 are separately disposed, the motor 1 in this implementation has a smaller volume and a more compact structure. This helps reduce a size of the motor 1. In addition, the motor 1 in this implementation can control, by disposing the first magnetic piece 24, the focusing bracket 40 to move relative to the image stabilization bracket 30 in the first direction Z, and can also control the image stabilization bracket 30 to move relative to the base 10 in the second direction X. Compared with the motor 1 in which a plurality of groups of different magnetic pieces need to be disposed to respectively cooperate with the focusing coils to control the focusing bracket 40 to move in the first direction Z, and cooperate with the image stabilization coils to drive the image stabilization bracket 30 to move in the second direction X, an overall structure of the motor 1 in this implementation is simpler and more compact, helping implement miniaturization of the motor 1. In addition, in a process in which the focusing bracket 40 moves relative to the image stabilization bracket 30 in the first direction Z, relative positions of the image stabilization bracket 30 and the base 10 are not affected. Therefore, relative positions of the first image stabilization coil 21 and the first magnetic piece 24 does not change. It can be ensured that a width of a magnetic gap between the first image stabilization coil 21 and the first magnetic piece 24 does not change in a process in which the focusing bracket 40 moves relative to the image stabilization bracket 30, thereby helping improve reliability of the motor 1.

As shown in FIG. 23, for example, the second focusing coil 28 may be disposed corresponding to the second magnetic piece 25 to form a second focusing driving group, and the second focusing driving group may also be configured to drive the focusing bracket 40 to move relative to the image stabilization bracket 30 in the first direction Z, to actuate the lens 2 to move in the first direction Z, so as to implement a focusing function of the motor 1. The first focusing driving group and the second focusing driving group are disposed, so that a bearing capacity of the motor 1 can be improved, and the motor 1 can drive the lens 2 with higher quality to implement a focusing process of the lens 2. That the second focusing coil 28 is disposed corresponding to the second magnetic piece 25 means that a winding plane of the second focusing coil 28 faces the second magnetic piece 25.

For example, the second magnetic piece 25 may include one or more magnets, and the second magnetic piece 25 may have a plurality of implementation structures. For example, in some embodiments, the second magnetic piece 25 may use a dual-magnet solution, for example, includes two magnets. The two magnets may be arranged in the first direction Z, and polarity directions are opposite. In some other embodiments, the second magnetic piece 25 may be a Halbach magnet array. In some other embodiments, the second magnetic piece 25 may use a single magnet solution, for example, include one magnet. The magnet includes two portions with opposite polarity directions, and the magnet may be made through a bipolar magnetization process. Designs of the second magnetic piece 25 and the second focusing coil 28 may be the same as or similar to those of the first magnetic piece 24 and the first focusing coil 27, provided that directions of ampere forces generated by the second focusing driving group and the first focusing driving group are the same. Details are not described herein again.

In addition, the first focusing driving group and the second focusing driving group may be respectively located on two opposite sides of the focusing bracket 40, and accompanying forces of the first focusing coil 27 and the second focusing coil 28 may counteract each other, to implement a more accurate driving action. In addition, both opposite sides of the focusing bracket 40 can be subject to the first driving force F1. This also helps improve stability and reliability of the focusing bracket 40 when the focusing bracket 40 moves relative to the image stabilization bracket 30. The accompanying force is a component that is of a magnetic force in a non-motion direction and that is caused by tilting of an edge magnetic field line of the first magnetic piece 24 or the second magnetic piece 25.

For example, the second image stabilization coil 22 may be disposed corresponding to the second magnetic piece 25 to form a second image stabilization driving group, and the second image stabilization driving group may be configured to drive the image stabilization bracket 30 to actuate the focusing bracket 40 to move relative to the base 10 in the second direction X, so as to actuate the lens 2 to move in the second direction X. This implements an image stabilization function of the motor 1. The first image stabilization driving group and the second image stabilization driving group are disposed, so that a driving force in the motor 1 in the second direction X can be increased, and the motor 1 can drive the lens 2 to implement an image stabilization process at a larger angle. The second focusing driving group and the second image stabilization driving group may share a magnetic field generated by the second magnetic piece 25, and the second magnetic piece 25 may cooperate with the second focusing coil 28 to control movement of the focusing bracket 40, and may further cooperate with the second image stabilization coil 22 to control the image stabilization bracket 30 to actuate the focusing bracket 40 to move.

As shown in FIG. 23, for example, the second focusing coil 28, the second magnetic piece 25, and the second image stabilization coil 22 may alternatively be sequentially arranged in the second direction X, so that a space of the motor 1 in the first direction Z can be saved, and the space of the motor 1 in the first direction Z can also be fully used. This helps improve utilization of an internal space of the motor 1, makes a structure of the motor 1 more compact, and helps implement thinning and miniaturization of the motor 1. In addition, the second magnetic piece 25 is located between the second image stabilization coil 22 and the second focusing coil 28, and the second magnetic piece 25 may further isolate the second image stabilization coil 22 from the second focusing coil 28. This avoids mutual interference caused by mutual superposition of magnetic fields generated after the second image stabilization coil 22 and the second focusing coil 28 are energized, and avoids a crosstalk phenomenon that affects control precision of a focusing process and an image stabilization process, thereby affecting reliability of the motor 1.

In this implementation, a relative position relationship, relative sizes, and the like of the first focusing coil 27, the first magnetic piece 24, and the first image stabilization coil 21 are designed. In this way, when the first image stabilization coil 21, the first magnetic piece 24, and the first focusing coil 27 are all vertically disposed and arranged in the second direction X, the first magnetic piece 24 can also be reused, so that the first magnetic piece 24 can cooperate with the first focusing coil 27 to implement a focusing function, and can also cooperate with the first image stabilization coil 21 to implement an image stabilization function. For designs such as a position relationship between the second focusing coil 28, the second magnetic piece 25, and the second image stabilization coil 22, refer to the following designs such as a position relationship between the first focusing coil 27, the first magnetic piece 24, and the first image stabilization coil 21. Details are not described herein again.

As shown in FIG. 23, for example, the first position sensor 531 fastened to the first side plate 12 may cooperate with the second position sensor 532 fastened to the second side plate 13 to detect a position change of the image stabilization bracket 30 in the second direction X.

As shown in FIG. 23, for example, the image stabilization magnetic attraction piece 19 may be disposed facing the first magnetic piece 24 and embedded in the bottom plate 11, and a magnetic force between the image stabilization magnetic attraction piece 19 and the first magnetic piece 24 makes the image stabilization bracket 30 tend to approach the bottom plate 11. Alternatively, the image stabilization magnetic attraction piece 19 may be disposed facing the second magnetic piece 25 and embedded in the bottom plate 11. A magnetic force between the image stabilization magnetic attraction piece 19 and the second magnetic piece 25 can also make the image stabilization bracket 30 tend to approach the bottom plate 11. The image stabilization magnetic attraction piece 19 is disposed to cooperate with the first magnetic piece 24 and the image stabilization magnetic attraction piece 19 is disposed to cooperate with the second magnetic piece 25, so that it can be ensured that the base 10 is in contact with the image stabilization bracket 30 in a movement process. This avoids a case in which the image stabilization bracket 30 moves in the first direction Z in a movement process, and affects reliability and control precision of the motor 1.

The following specifically describes an implementation solution of the motor 1 in this application with reference to related accompanying drawings. In another embodiment, the motor 1 may further have another implementation solution.

As shown in FIG. 23 and FIG. 24, for example, the first magnetic piece 24 may include two magnets, the two magnets may respectively be the first magnet 241 and the second magnet 242, and the first magnet 241 and the second magnet 242 are arranged in the first direction Z. A polarity direction of the first magnet 241 is opposite to a polarity direction of the second magnet 242, and is parallel to the second direction X. The first focusing coil 27 may include a first edge 271 and a second edge 272 that are disposed opposite to each other in the first direction Z, the first edge 271 of the first focusing coil 27 is disposed opposite to the first magnet 241, and the second edge 272 of the first focusing coil 27 is disposed opposite to the second magnet 242. It can be understood that the polarity direction may be a direction from a north pole (N) to a south pole (S), or a direction from a south pole (S) to a north pole (N). In this embodiment of this application, an example in which the polarity direction of the first magnet 241 is a direction from the north pole (N) to the south pole (S), and the polarity direction of the second magnet 242 is a direction from the south pole (S) to the north pole (N) is used for description. In other words, a side that is of the first magnetic piece 24 and that faces the first focusing coil 27 may include the north pole (N) and the south pole (S), and a side that is of the first magnetic piece 24 and that faces away from the first focusing coil 27 correspondingly includes the south pole (S) and the north pole (N). In another embodiment, the polarity direction of the first magnet 241 may alternatively be a direction from the south pole (S) to the north pole (N), and the polarity direction of the second magnet 242 may be a direction from the north pole (N) to the south pole (S). This is not limited in this application.

When a current is supplied to the first focusing coil 27, a current flow direction of the first edge 271 of the first focusing coil 27 may be opposite to a current flow direction of the second edge 272 of the first focusing coil 27, and polarity directions of the first magnet 241 and the second magnet 242 may be opposite. In this way, a direction of an ampere force exerted on the first edge 271 of the first focusing coil 27 in a magnetic field generated by the first magnet 241 may be the same as a direction of an ampere force exerted on the second edge 272 of the first focusing coil 27 in a magnetic field generated by the second magnet 242, and a combined force formed through superposition can provide a larger first driving force F1 for a focusing process of the motor 1. This helps improve driving efficiency and increase an optical focusing stroke. In this embodiment of this application, an example in which a clockwise current is supplied to the first focusing coil 27 is used for description. In FIG. 16, a circle with "×" indicates that a current flows in relative to a cross section, and a solid circle indicates that a current flows out relative to the cross section. In this case, an ampere force in the first direction Z is formed on the first edge 271 ofthe first focusing coil 27, and an ampere force in the first direction Z is formed on the second edge 272 of the first focusing coil 27. Therefore, a direction of the combined force of the ampere forces formed on the first focusing coil 27 is parallel to the first direction Z, for driving the focusing bracket 40 to move in the first direction Z.

For example, the first image stabilization coil 21 may include a first image stabilization sub-coil 211 and a second image stabilization sub-coil 212. The first image stabilization sub-coil 211 faces the first magnet 241, and the second image stabilization sub-coil 212 faces the second magnet 242. In this implementation, the first image stabilization sub-coil 211 faces the first magnet 241. It may be considered that the first image stabilization sub-coil 211 and the first magnet 241 may maintain a direct opposite relationship or an almost direct opposite relationship, and a projection of the first image stabilization sub-coil 211 in the second direction X is located only or almost only in the first magnet 241. In this case, a combined force of ampere forces formed on the energized first image stabilization sub-coil 211 is zero, that is, the image stabilization bracket 30 does not move in the first direction Z relative to the base 10. The first image stabilization sub-coil 211 may be directly opposite to the first magnetic piece 24, and a magnetic flux of the first image stabilization sub-coil 211 may be a maximum value, so that the first image stabilization sub-coil 211 can form a first electromagnet (an electromagnet herein is denoted as the first electromagnet, and is used to distinguish from a second electromagnet). Similarly, a combined force of ampere forces formed on the energized second image stabilization sub-coil 212 is zero, and the second electromagnet is also formed.

In this embodiment of this application, an example in which a counterclockwise current is supplied to the first image stabilization sub-coil 211 is used for description. The first image stabilization sub-coil 211 has a third edge 2111 and a fourth edge 2112 that are disposed opposite to each other in the first direction Z, and the fourth edge 2112 is close to the second image stabilization sub-coil 212 relative to the third edge 2111. A current direction of the third edge 2111 of the first image stabilization sub-coil 211 is in a negative direction of the third direction Y, an ampere force in a negative direction of the first direction Z is formed on the third edge 2111 of the first image stabilization sub-coil 211, a current direction of the fourth edge 2112 of the first image stabilization sub-coil 211 is in a positive direction of the third direction Y, and an ampere force in a positive direction of the first direction Z is formed on the fourth edge 2112 of the first focusing coil 27. Therefore, a combined force of the ampere forces formed on the first image stabilization sub-coil 211 is zero. In this case, the first image stabilization sub-coil 211 may be considered as a first electromagnet. In addition, a polarity direction of the first electromagnet is parallel to the second direction X, and in a direction from the south pole (S) to the north pole (N), a side that is of the first electromagnet and that is close to the first magnet 241 is the south pole (S), and a side that is of the first magnet 241 and that is close to the first electromagnet is also the south pole (S). A repulsion force in the second direction X is generated between the first magnet and the first magnet 241, and can push the image stabilization bracket 30 to move in the second direction X relative to the base 10.

The first image stabilization sub-coil 211 and the second image stabilization sub-coil 212 are respectively disposed corresponding to the first magnet 241 and the second magnet 242. In this implementation, a driving force for pushing the image stabilization bracket 30 to move in the motor 1 may include a magnetic force between the first electromagnet and the first magnet 241 and a magnetic force between the second electromagnet and the second magnet 242. The magnetic force may be an attraction force or a repulsion force. This helps increase a value of a second driving force F2, improve driving efficiency, and increase an optical image stabilization stroke.

For example, current directions of the first image stabilization sub-coil 211 and the second image stabilization sub-coil 212 may be the same or may be different. For example, the first image stabilization sub-coil 211 and the second image stabilization sub-coil 212 may be disposed in series or in parallel, or separately supplied with power. Parameters such as wire diameters and quantities of turns of the first image stabilization sub-coil 211 and the second image stabilization sub-coil 212 may be set to a same value, or may be set to different values. The second magnet 242 and the second image stabilization sub-coil 212 may be designed the same as or similar to those of the first magnet 241 and the first image stabilization sub-coil 211, a direction of a driving force generated by the second magnet 242 is the same as a direction of a driving force generated by the second image stabilization sub-coil 212, and a direction of a driving force generated by the first magnet 241 is the same as a direction of a driving force generated by the first image stabilization sub-coil 211. Details are not described herein again.

For example, winding planes of both the first image stabilization sub-coil 211 and the second image stabilization sub-coil 212 may be parallel to the first direction Z. The winding planes of the first image stabilization sub-coil 211 and the second image stabilization sub-coil 212 may be set to be parallel to the first direction Z. In other words, the first image stabilization sub-coil 211 and the second image stabilization sub-coil 212 are vertically arranged. This helps reduce a size of the motor 1 in the second direction X, and helps implement miniaturization of the motor 1.

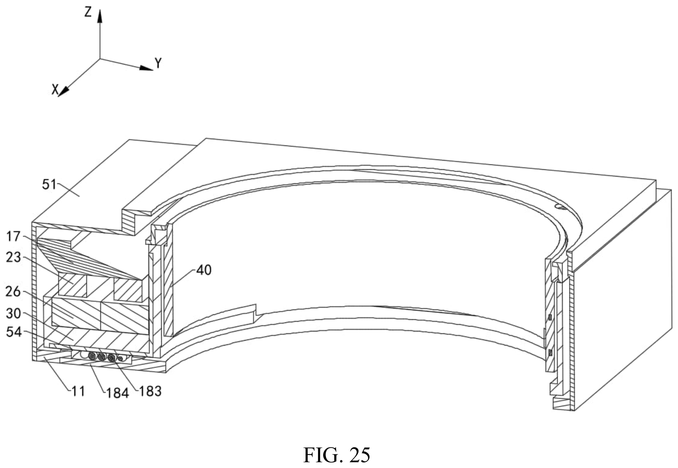

FIG. 25 is a diagram of a cross-sectional structure of the motor 1 shown in FIG. 22 and cut along H-H.

As shown in FIG. 25, in some embodiments, the third magnetic piece 26 is fastened to the image stabilization bracket 30, the third image stabilization coil 23 is fastened to the fastening plate 17, and the third image stabilization coil 23 is disposed facing the third magnetic piece 26, and is configured to drive the image stabilization bracket 30 to move relative to the base 10 in the third direction Y. The third magnetic piece 26 and the third image stabilization coil 23 are arranged in the first direction Z. That the third image stabilization coil 23 is disposed facing the third magnetic piece 26 means that a winding plane of the third image stabilization coil 23 faces the third magnetic piece 26. For example, the winding plane of the third image stabilization coil 23 may be disposed parallel to the third direction Y. In this case, the third image stabilization coil 23 may be disposed horizontally. This helps reduce a size of the motor 1 in the first direction Z and implement miniaturization of the motor 1. For example, the third position sensor 533 (refer to FIG. 12) may be configured to detect a position change of the image stabilization bracket 30 in the third direction Y.

In this implementation, the third magnetic piece 26 and the third image stabilization coil 23 cooperate to form a third image stabilization driving group, to provide a degree of freedom for the lens 2 to move in the third direction Y. This helps improve an application range of the motor 1 and optimize image stabilization performance. In addition, the third image stabilization coil 23 and the third magnetic piece 26 are disposed in the first direction Z. In a process in which the image stabilization bracket 30 moves relative to the base 10, a movement direction of the image stabilization bracket 30 may be perpendicular to a magnetic gap between the third magnetic piece 26 and the third image stabilization coil 23. The magnetic gap is not affected by a movement action of the image stabilization bracket 30. Therefore, a problem of a rapid decrease of a driving force caused by an increase of the magnetic gap can be avoided, and stability of the driving force can be ensured while a large image stabilization driving force is obtained. This is beneficial to a large-stroke image stabilization design.

The following further describes a circuit setting between the motor 1 and the module circuit board 3 in detail with reference to related accompanying drawings.

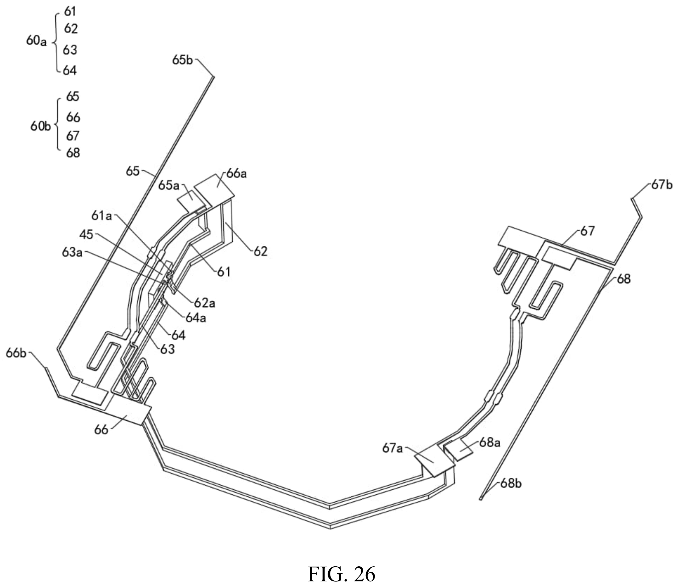

FIG. 26 is a diagram of a partial structure of a line in which the focusing driver chip 45 shown in FIG. 23 is electrically connected to an external structure according to an embodiment.

As shown in FIG. 26, for example, the motor 1 may further include a plurality of traces 60a and a plurality of conductive spring plates 60b. For example, the plurality of traces 60a may include a first trace 61, a second trace 62, a third trace 63, and a fourth trace 64. The plurality of conductive spring plates 60b may include a first conductive spring plate 65, a second conductive spring plate 66, a third conductive spring plate 67, and a fourth conductive spring plate 68. The plurality of conductive spring plates 60b may be an implementation structure of the spring plate 60 in FIG. 3 in the foregoing embodiment. In other words, the spring plate 60 may include a plurality of conductive spring plates 60b.

For example, the plurality of traces 60a may be embedded in the focusing bracket 40 (as shown in FIG. 15) and are spaced. For example, the first trace 61, the second trace 62, the third trace 63, and the fourth trace 64 may all be conductive traces. The first trace 61, the second trace 62, the third trace 63, and the fourth trace 64 may all be embedded in the focusing bracket 40. In another embodiment, positions of the first trace 61, the second trace 62, the third trace 63, and the fourth trace 64 are not specifically limited.

For example, output ends of the plurality of traces 60a are all exposed relative to the focusing bracket 40, and input ends of the plurality of traces 60a are all embedded in the focusing bracket 40 and electrically connected to a plurality of ports of the focusing driver chip 45 in a one-to-one correspondence.

For example, an output end 61b (as shown in FIG. 15) of the first trace 61 may be exposed relative to a surface of the focusing bracket 40. An input end 61a of the first trace 61 may be electrically connected to an SDA signal end of the focusing driver chip 45. It may be understood that, the SDA signal end may be configured to transmit a serial data (serial data, SDA) signal of an I2C signal.

For example, an output end 62b (as shown in FIG. 15) of the second trace 62 may be exposed relative to the surface of the focusing bracket 40. An input end 62a of the second trace 62 may be electrically connected to the SCL signal end of the focusing driver chip 45. The output end 62b of the second trace 62 may be exposed relative to a top surface of the focusing bracket 40, and the output end 62b of the second trace 62 and the output end 61b of the first trace 61 are spaced apart on a side close to the second protrusion 42 (as shown in FIG. 15). It may be understood that, the SCL signal end may be configured to transmit a serial clock (serial clock, SCL) signal of an I2C signal.

For example, an output end 63b (as shown in FIG. 15) of the third trace 63 may be exposed relative to the surface of the focusing bracket 40. An input end 63a of the third trace 63 may be electrically connected to a positive power terminal of the focusing driver chip 45.

For example, an output end 64b (as shown in FIG. 15) of the fourth trace 64 may be exposed relative to the surface of the focusing bracket 40. An input end 64a of the fourth trace 64 may be electrically connected to a negative power terminal of the focusing driver chip 45. The output end 64b of the fourth trace 64 may be exposed relative to the top surface of the focusing bracket 40, and the output end 64b and the output end 63b of the third trace 63 are both spaced apart on a side close to the first protrusion 41 (as shown in FIG. 15).

In another embodiment, the first trace 61, the second trace 62, the third trace 63, and the fourth trace 64 each may be of a flexible printed circuit board structure. The first trace 61, the second trace 62, the third trace 63, and the fourth trace 64 may also be integrated into one flexible printed circuit board.

In some embodiments, the first conductive spring plate 65, the second conductive spring plate 66, the third conductive spring plate 67, and the fourth conductive spring plate 68 each may be of a metal elastomer structure, and may be deformed under stress, that is, have a stretchable function. For example, the plurality of conductive spring plates 60b may be fastened to the image stabilization bracket 30 and spaced. For example, the first conductive spring plate 65, the second conductive spring plate 66, the third conductive spring plate 67, and the fourth conductive spring plate 68 may all be disposed on a top surface of the image stabilization bracket 30. It may be understood that the first conductive spring plate 65, the second conductive spring plate 66, the third conductive spring plate 67, and the fourth conductive spring plate 68 may use a size space of the X-Y plane of the motor 1. In this way, the first conductive spring plate 65, the second conductive spring plate 66, the third conductive spring plate 67, and the fourth conductive spring plate 68 may be disposed in a large area, to implement a small motion reaction force.

For example, the conductive spring plates 60b may have input ends and output ends. The input ends of the conductive spring plates 60b may be electrically connected to output ends of a plurality of traces 60a in a one-to-one correspondence, and the output ends of the conductive spring plates 60b may be electrically connected to external structures in a one-to-one correspondence. In this case, the input ends of the plurality of conductive spring plates 60b are electrically connected to the focusing driver chip 45 by using the plurality of traces 60a in a one-to-one correspondence. In other words, the plurality of conductive spring plates 60b may be respectively used as transmission channels of port signals of the focusing driver chip 45, and an external structure like the module circuit board 3 (as shown in FIG. 2) may be electrically connected to the focusing driver chip 45 by electrically connecting to the conductive spring plate 60b.

For example, an input end 65a of the first conductive spring plate 65 may be electrically connected to the output end 61b of the first trace 61. In this case, the first conductive spring plate 65 may be electrically connected to the SDA signal end of the focusing driver chip 45 through the first trace 61. An input end 66a of the second conductive spring plate 66 may be electrically connected to the output end 62b of the second trace 62. In this case, the second conductive spring plate 66 may be electrically connected to the SCL signal end of the focusing driver chip 45 through the second trace 62. An input end 67a of the third conductive spring plate 67 may be electrically connected to the output end 63b of the third trace 63. In this case, the third conductive spring plate 67 may be electrically connected to the positive power terminal of the focusing driver chip 45 through the third trace 63. An input end 68a of the fourth conductive spring plate 68 may be electrically connected to the output end 64b of the fourth trace 64. In this case, the fourth conductive spring plate 68 may be electrically connected to the negative power terminal of the focusing driver chip 45 through the fourth trace 64.

The input end 65a of the first conductive spring plate 65 may be fastened to the output end 61b of the first trace 61 through soldering, conductive adhesive, or the like. For a connection manner between the input end 66a of the second conductive spring plate 66 and the output end 62b of the second trace 62, a connection manner between the input end 67a of the third conductive spring plate 67 and the output end 63b of the third trace 63, and a connection manner between the input end 68a of the fourth conductive spring plate 68 and the output end 64b of the fourth trace 64, refer to the connection manner between the input end 65a of the first conductive spring plate 65 to the output end 61b of the first trace 61. Details are not described herein again.

For example, the first conductive spring plate 65 may be further used as a transmission channel for an SDA signal of a driver chip of the variable-aperture stop 7 (as shown in FIG. 2). The second conductive spring plate 66 may be used as a transmission channel for an SCL signal of the driver chip of the variable-aperture stop 7. The third conductive spring plate 67 may be used as a transmission channel of a positive power terminal of the driver chip of the variable-aperture stop 7. The fourth conductive spring plate 68 may be used as a transmission channel of a negative power terminal of the driver chip of the variable-aperture stop 7. In other words, the conductive spring plate 60b may be further used as a transmission channel of each port signal of the variable-aperture stop 7. An external structure like the module circuit board 3 (as shown in FIG. 2) may be electrically connected to the conductive spring plate 60b, to implement an electrical connection to the variable-aperture stop 7.

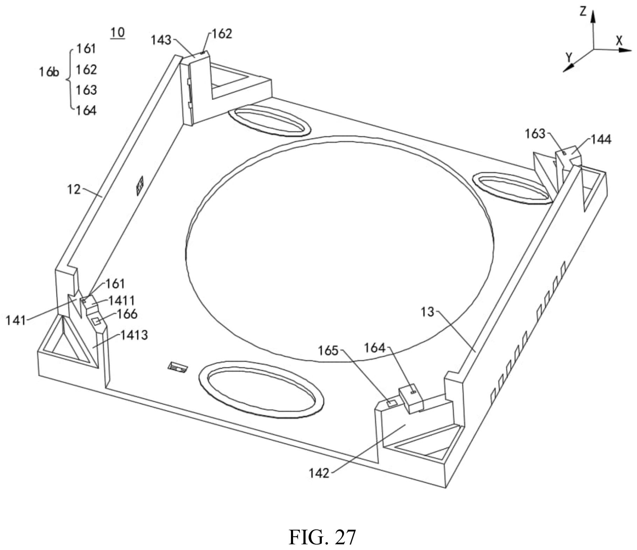

FIG. 27 is a diagram of a partial structure of the base 10 shown in FIG. 4 according to an embodiment.

As shown in FIG. 27, for example, a plurality of conductive pieces 16b may include a first conductive piece 161, a second conductive piece 162, a third conductive piece 163, a fourth conductive piece 164, a fifth conductive piece 165, and a sixth conductive piece 166. The plurality of conductive pieces 16b may all be conductive traces, or may respectively use flexible printed circuit board structures. This is not limited in this application.

For example, the first conductive piece 161 may be embedded in the first fastening block 141 and the first side plate 12, and one end of the first conductive piece 161 may be exposed relative to the top surface 1411 ofthe first fastening block 141. The other end of the first conductive piece 161 may be electrically connected to the module circuit board 3 (as shown in FIG. 2).

For example, the second conductive piece 162 may be embedded in the third fastening block 143 and the first side plate 12, one end of the second conductive piece 162 may be exposed relative to the top surface 1411 of the third fastening block 143, and the other end of the second conductive piece 162 may be electrically connected to the module circuit board 3 (as shown in FIG. 2).

For example, the third conductive piece 163 may be embedded in the fourth fastening block 144 and the second side plate 13, one end of the third conductive piece 163 may be exposed relative to the top surface 1411 of the fourth fastening block 144, and the other end of the third conductive piece 163 may be electrically connected to the module circuit board 3 (as shown in FIG. 2).

For example, the fourth conductive piece 164 may be embedded in the second fastening block 142 and the second side plate 13, one end of the fourth conductive piece 164 may be exposed relative to the top surface 1411 of the second fastening block 142, and the other end of the fourth conductive piece 164 may be electrically connected to the module circuit board 3 (as shown in FIG. 2).

For example, the fifth conductive piece 165 may be embedded in the second fastening block 142 and the second side plate 13, one end of the fifth conductive piece 165 may be exposed relative to the top surface 1411 of the second fastening block 142, and the other end of the fifth conductive piece 165 may be electrically connected to the module circuit board 3 (as shown in FIG. 2).

For example, the sixth conductive piece 166 may be embedded in the first fastening block 141 and the first side plate 12, one end of the sixth conductive piece 166 may be exposed relative to the top surface 1411 of the first fastening block 141, and the other end of the sixth conductive piece 166 may be electrically connected to the module circuit board 3 (as shown in FIG. 2).

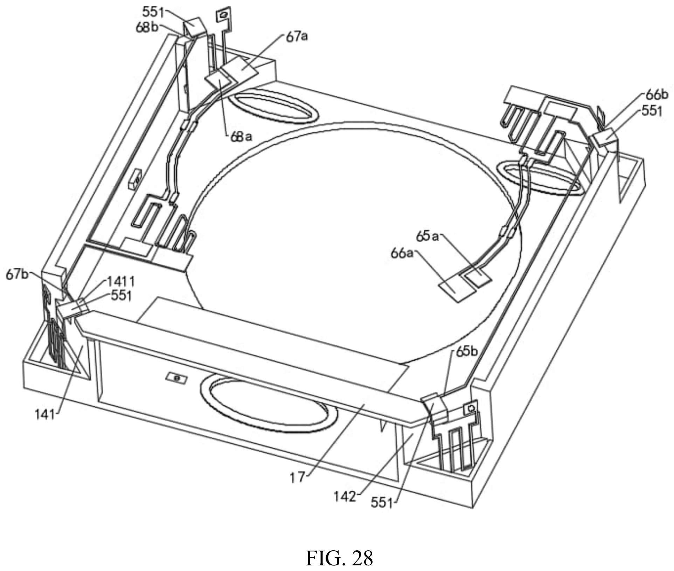

FIG. 28 is a diagram of a structure of a line in which the motor 1 shown in FIG. 2 is electrically connected to an external structure according to an embodiment.

As shown in FIG. 27 and FIG. 28, for example, the conductive piece 16b may be used as a transmission channel between the conductive spring plate 60b and the module circuit board 3. In this case, one end of each of a plurality of conductive pieces 16b may be electrically connected to an output end of each of the plurality of conductive spring plates 60b in a one-to-one correspondence, to implement an electrical connection between the focusing driver chip 45, the variable-aperture stop 7, or the like and the module circuit board 3. One end of each of the plurality of conductive pieces 16b may be in one-to-one correspondence with an output end of each of the plurality of conductive spring plates 60b, to implement an electrical connection; or one end of each of the plurality of conductive pieces 16b may also be electrically connected to an output end of each of the plurality of conductive spring plates 60b through another mechanical part, for example, the elastic piece 55.

As shown in FIG. 28, for example, the elastic piece 55 may be made of a conductive material, and the first end 551 of the elastic piece 55 may be fastened to the output end of the conductive spring plate 60b. In this case, the first end 551 of the elastic piece 55 may be in contact with the top surface 1411 of the fastening block 14, so that the fastening block 14 can provide a specific support force for the elastic piece 55, and the first end 551 of the elastic piece 55 can be electrically connected to the conductive spring plate 60b. This avoids bending of the conductive spring plate 60b, and improves stability and reliability of an electrical connection in the motor 1.

Specifically, in this embodiment of this application, the first ends 551 of the four elastic pieces 55 may be respectively connected to the first conductive piece 161, the second conductive piece 162, the third conductive piece 163, and the fourth conductive piece 164, and the first ends 551 of the four elastic pieces 55 may be further respectively connected to the output end 67b of the third conductive spring plate 67, the output end 68b of the fourth conductive spring plate 68, the output end 66b of the second conductive spring plate 66, and the output end 65b of the first conductive spring plate 65. In other words, the four elastic pieces 55 may be respectively used as a transmission channel between the first conductive piece 161 and the third conductive spring plate 67, a transmission channel between the second conductive piece 162 and the fourth conductive spring plate 68, a transmission channel between the third conductive piece 163 and the second conductive spring plate 66, and a transmission channel between the fourth conductive piece 164 and the first conductive spring plate 65. In this way, the module circuit board 3 is electrically connected to the focusing driver chip 45 or the variable-aperture stop 7 through the conductive piece 16b, the elastic piece 55, and the conductive spring plate 60b.

In some embodiments, the conductive piece 16b may alternatively be used as a transmission channel between another mechanical part like the fastening plate 17 in the motor 1 and the module circuit board 3. For example, the fastening plate 17 may be made of a conductive material, and each of two ends of the fastening plate 17 may be fastened to one end of each of the plurality of conductive pieces 16b, so that the module circuit board 3 supplies power to the third image stabilization coil 23 through the conductive piece 16b and the fastening plate 17. Specifically, two opposite ends of the fastening plate 17 may be electrically connected to the fifth conductive piece 165 and the sixth conductive piece 166.

It should be noted that embodiments in this application and features in embodiments may be combined with each other without a conflict, and any combination of features in different embodiments also falls within the protection scope of this application. In other words, the foregoing described plurality of embodiments may be further combined based on an actual requirement.

It should be noted that all the foregoing accompanying drawings are examples of this application, and do not represent an actual size of a product. In addition, a size proportional relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor (1), comprising:
a base (10);
an image stabilization bracket (30) that is movably connected to the base (10);
a focusing bracket (40), wherein the focusing bracket (40) is located on an inner side of the image stabilization bracket (30), and is movably connected to the image stabilization bracket (30);
a first magnetic piece (24) that is fastened to the image stabilization bracket (30);
a first focusing coil (27) that is fastened to the focusing bracket (40), wherein the first focusing coil (27) is disposed facing the first magnetic piece (24), to drive the focusing bracket (40) to move relative to the base (10) in a first direction; and
a first image stabilization coil (21) that is fastened to the base (10), wherein the first image stabilization coil (21) is disposed facing the first magnetic piece (24), to drive the image stabilization bracket (30) to actuate the focusing bracket (40) to move relative to the base (10) in a second direction, and the second direction intersects the first direction, wherein
the first image stabilization coil (21), the first magnetic piece (24), and the first focusing coil (27) are sequentially arranged in the second direction.

2. The motor (1) according to claim 1, wherein the first magnetic piece (24) comprises a first magnet (241) and a second magnet (242), the first magnet (241) and the second magnet (242) are arranged in the first direction, a polarity direction of the first magnet (241) is opposite to a polarity direction of the second magnet (242), and is parallel to the second direction; and
the first image stabilization coil (21) comprises a first image stabilization sub-coil (211) and a second image stabilization sub-coil (212), the first image stabilization sub-coil (211) faces the first magnet (241), and the second image stabilization sub-coil (212) faces the second magnet (242).

3. The motor (1) according to claim 2, wherein both winding planes of the first image stabilization sub-coil (211) and the second image stabilization sub-coil (212) are parallel to the first direction.

4. The motor (1) according to any one of claims 1 to 3, wherein the base (10) comprises a bottom plate (11) and a first side plate (12), the first side plate (12) is connected to a surface of the bottom plate (11), and the image stabilization bracket (30) is located on an inner side of the first side plate (12), and is movably connected to the bottom plate (11); and
the image stabilization bracket (30) comprises a first edge portion (31a), the first edge portion (31a) is disposed opposite to the first side plate (12), the first magnetic piece (24) is fastened to the first edge portion (31a), and the first image stabilization coil (21) is fastened to the first side plate (12).

5. The motor (1) according to claim 4, wherein the first edge portion (31a) is provided with a first via (311), and the first via (311) communicates the inner side with an outer side of the image stabilization bracket (30); and
the first magnetic piece (24) is at least partially located in the first via (311).

6. The motor (1) according to claim 4 or 5, wherein the base (10) comprises a second side plate (13), the second side plate (13) is connected to the surface ofthe bottom plate (11), the second side plate (13) is located on a side that is of the image stabilization bracket (30) and that is away from the first side plate (12), the image stabilization bracket (30) comprises a second edge portion (32a), and the second edge portion (32a) is disposed opposite to the second side plate (13);
the motor (1) comprises a second magnetic piece (25) and a second image stabilization coil (22); and
the second magnetic piece (25) is fastened to the second edge portion (32a), the second image stabilization coil (22) is fastened to the second side plate (13), and the second image stabilization coil (22) is disposed facing the second magnetic piece (25), to drive the image stabilization bracket (30) to actuate the focusing bracket (40) to move relative to the base (10) in the second direction.

7. The motor (1) according to claim 6, wherein the motor (1) further comprises a second focusing coil (28), and the second focusing coil (28) is fastened to a side that is of the focusing bracket (40) and that faces away from the first focusing coil (27); and
the second focusing coil (28) is disposed facing the second magnetic piece (25), to drive the focusing bracket (40) to move relative to the base (10) in the first direction.

8. The motor (1) according to any one of claims 1 to 7, wherein the motor (1) further comprises a third magnetic piece (26) and a third image stabilization coil (23), the third magnetic piece (26) is mounted on the image stabilization bracket (30), the third image stabilization coil (23) is disposed facing the third magnetic piece (26), the third magnetic piece (26) is configured to drive the image stabilization bracket (30) to move relative to the base (10) in a third direction, wherein the third direction intersects both the first direction and the second direction; and
the third image stabilization coil (23) and the third magnetic piece (26) are arranged in the first direction.

9. The motor (1) according to claim 8, wherein the base (10) comprises a bottom plate (11), a first fastening block (141), a second fastening block (142), and a fastening plate (17), the first fastening block (141) and the second fastening block (142) are fastened to the bottom plate (11) and are spaced from each other, one end of the fastening plate (17) is fastened to the first fastening block (141), the other end of the fastening plate (17) is fastened to the second fastening block (142), and the bottom plate (11), the first fastening block (141), the second fastening block (142), and the fastening plate (17) enclose an accommodation space (171); and
the third image stabilization coil (23) is fastened to a side that is of the fastening plate (17) and that faces the accommodation space (171), and at least a part of the third magnetic piece (26) extends into the accommodation space (171).

10. The motor (1) according to any one of claims 1 to 8, wherein the motor (1) further comprises a ball group (18), the ball group (18) is mounted on the base (10), and the image stabilization bracket (30) is movably connected to the base (10) through the ball group (18).

11. The motor (1) according to claim 10, wherein the ball group (18) comprises a first ball group (181), a second ball group (182), and a third ball group (183), and the first ball group (181), the second ball group (182), and the third ball group (183) are arranged triangularly.

12. The motor (1) according to claim 10, wherein a diameter of a ball of the ball group (18) is less than or equal to 0.3 millimeter.

13. The motor (1) according to claim 10, wherein the motor (1) further comprises a metal piece (184), and the metal piece (184) is fastened to the base (10); and
the image stabilization bracket (30) is movably connected to the metal piece (184) through the at least two of the ball groups (18).

14. The motor (1) according to claim 13, wherein the metal piece (184) is embedded in the base (10), the base (10) is provided with a groove (116), the metal piece (184) is exposed relative to the base (10) through the groove (116), and the ball group (18) is located in the groove (116).

15. The motor (1) according to any one of claims 1 to 14, wherein the motor (1) further comprises a sliding shaft (52), the sliding shaft (52) is fastened to the image stabilization bracket (30), the focusing bracket (40) is slidably connected to the image stabilization bracket (30) through the sliding shaft (52), and the sliding shaft (52) is made of a magnetically conductive material; and
the motor (1) further comprises a focusing magnetic attraction piece (432), the focusing magnetic attraction piece (432) is fastened to the focusing bracket (40), and the focusing magnetic attraction piece (432) is disposed close to the sliding shaft (52), to generate a magnetic attraction force with the sliding shaft (52), and the magnetic attraction force enables the focusing bracket (40) to be attracted to the sliding shaft (52).

16. The motor (1) according to any one of claims 1 to 15, wherein the base (10) comprises the bottom plate (11) and four fastening blocks (14), and the four fastening blocks (14) are respectively fastened at four corners of the bottom plate (11); and
the motor (1) further comprises four elastic pieces (55), first ends (551) of the four elastic pieces (55) are fastened to the four fastening blocks (14) in a one-to-one correspondence, and second ends (552) of the four elastic pieces (55) are fastened at four positions of the image stabilization bracket (30) in a one-to-one correspondence.

17. The motor (1) according to claim 16, wherein the fastening block (14) is provided with an accommodating groove (15), and a middle portion (553) of the elastic piece (55) is located in the accommodating groove (15); and
the motor (1) further comprises a damping adhesive, and the damping adhesive is located in the accommodating groove (15) and wraps a part of the middle portion (553) of the elastic piece (55).

18. The motor (1) according to claim 16 or 17, wherein the fastening block (14) comprises a side surface (1413), and a top surface (1411) and a bottom surface (1412) that are disposed opposite to each other, and the side surface (1413) is connected between the top surface (1411) and the bottom surface (1412);
the motor (1) comprises a conductive piece (16b), and a part of the conductive piece (16b) is embedded in the fastening block (14); and
the elastic piece (55) is a conductive material, a first end (551) of the elastic piece (55) is bent and connected relative to the middle portion (553) of the elastic piece (55), the middle portion (553) of the elastic piece (55) is disposed opposite to and spaced from the side surface (1413) of the fastening block (14), and the first end (551) of the elastic piece (55) is fastened to the conductive piece (16b).

19. The motor (1) according to any one of claims 1 to 18, wherein a driving force for the focusing bracket (40) to move in the first direction is an ampere force formed on the first focusing coil (27) when the energized first focusing coil (27) is in a magnetic field of the first magnetic piece (24); and
a driving force for the image stabilization bracket (30) to move in the second direction is an attraction force or a repulsion force between the first magnetic piece (24) and an electromagnet after the first image stabilization coil (21) is energized to form the electromagnet.

20. A camera module (100), comprising a lens (2), an image sensor (4), and the motor (1) according to any one of claims 1 to 19, wherein the lens (2) is mounted in the motor (1), and the image sensor (4) is located on a light exit side of the lens (2).

21. The camera module (100) according to claim 20, wherein the camera module (100) further comprises a variable-aperture stop (7), and the variable-aperture stop (7) is located on a light entrance side of the lens (2).

22. An electronic device (1000), comprising a device housing (200) and the camera module (100) according to claim 20 or 21, wherein the camera module (100) is disposed in the device housing (200).
